(19) Europäisches Patentamt
European Patent Office
Office européen des brevets

(11) **EP 4 671 584 A1**

(12) **EUROPEAN PATENT APPLICATION**
published in accordance with Art. 153(4) EPC

(43) Date of publication:
**31.12.2025   Bulletin 2026/01**

(21) Application number: 23924237.3

(22) Date of filing: **19.12.2023**

(51) International Patent Classification (IPC):
**F16K 31/04** (2006.01)

(52) Cooperative Patent Classification (CPC):
**F16K 31/04**

(86) International application number:
**PCT/JP2023/045451**

(87) International publication number:
**WO 2024/176593 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **24.02.2023   JP 2023027775**

(71) Applicant: **Fujikoki Corporation
Tokyo 158-0082 (JP)**

(72) Inventors:
• **YAMADA, Kento
  Tokyo 158-0082 (JP)**
• **WATANABE, Takayuki
  Tokyo 158-0082 (JP)**
• **HAGIMOTO, Hiroshi
  Tokyo 158-0082 (JP)**

(74) Representative: **Ter Meer Steinmeister & Partner
Patentanwälte mbB
Artur-Ladebeck-Strasse 51
33617 Bielefeld (DE)**

(54) **MOTORIZED VALVE CONTROL DEVICE, MOTORIZED VALVE DEVICE, AND METHOD FOR CONTROLLING MOTORIZED VALVE**

(57)     To provide a motor-operated valve control device, a motor-operated valve device including a motor-operated valve control device, and a method for controlling a motor-operated valve that are capable of reducing a duration of an initialization operation for the motor-operated valve and suppressing noise.

A motor-operated valve control device (70) inputs a second preparation number of pulses to a stepping motor (66) to rotate a rotor (41) in a second direction (second preparation operation) and inputs a first preparation number of pulses to the stepping motor (66) to rotate the rotor in a first direction (first preparation operation). The motor-operated valve control device (70) obtains a voltage generated in a stator by rotation of the rotor (41) in the first direction. The motor-operated valve control device (70) sets a waveform of the voltage obtained during the first preparation operation as a reference waveform of the voltage. The motor-operated valve control device (70) determines whether a motor-operated valve 5 is in a rotation restricted state, based on a difference between the waveform of the voltage and the reference waveform of the voltage.

FIG.22

```
      ┌─────────┐
      │  START  │
      └────┬────┘
           │
  ┌────────────────────────────┐
  │ RECEIVE INITIALIZATION COMMAND │──── S100
  └────────────┬───────────────┘
           │
  ┌────────────────────────────┐
  │   SECOND PREPARATION       │──── S200
  │      OPERATION             │
  └────────────┬───────────────┘
           │
  ┌────────────────────────────┐
  │   FIRST PREPARATION        │──── S400
  │      OPERATION             │
  └────────────┬───────────────┘
           │
  ┌────────────────────────────┐
  │    POSITIONING             │──── S600
  │     OPERATION              │
  └────────────┬───────────────┘
           │
      ┌─────────┐
      │   END   │
      └─────────┘
```

EP 4 671 584 A1

## Description

Technical Field

The present invention relates to a motor-operated valve control device, a motor-operated valve device including a motor-operated valve control device, and a method for controlling a motor-operated valve.

Background Art

Patent Literature 1 discloses an example of a motor-operated valve according to the related art. The motor-operated valve is installed in a refrigeration cycle system of an air conditioner. The motor-operated valve includes a valve body, a valve member, and a stepping motor for moving the valve member. The stepping motor includes a rotor and a stator. The rotor rotates in response to a pulse input to the stepping motor. The valve member moves along with the rotation of the rotor. When the rotor is at a reference position, a movable stopper rotating with the rotor is in contact with a fixed stopper fixed to the valve body, thereby restricting the rotor from rotating in a first direction.

The motor-operated valve is controlled by a motor-operated valve control device. In an initialization operation, the motor-operated valve control device inputs pulses to the stepping motor to rotate the rotor in the first direction and positions the rotor at the reference position. A sufficient number of pulses are input to the stepping motor to bring the movable stopper into contact with the fixed stopper. This number is hereinafter referred to as an "initialization number". When the rotor rotates in the first direction and the movable stopper comes into contact with the fixed stopper, the rotor is positioned at the reference position.

Citation List

Patent Literature

Patent Literature 1: WO2019/130928

Summary of Invention

Technical Problem

The motor-operated valve control device inputs pulses to the stepping motor until the number of pulses input to the stepping motor reaches the initialization number. Thus, the motor-operated valve control device may further input pulses after the rotor is positioned at the reference position, resulting in a long duration of the initialization operation. Additionally, when pulses are input to the stepping motor after the rotor is positioned at the reference position, the movable stopper repeatedly collides with the fixed stopper, thereby generating noise. Especially when the rotor is near the reference position immediately before the initialization operation starts, the noise lasts a long time.

Accordingly, it is an object of the present invention to provide a motor-operated valve control device, a motor-operated valve device including a motor-operated valve control device, and a method for controlling a motor-operated valve that are capable of reducing a duration of an initialization operation for the motor-operated valve and suppressing noise.

Solution to Problem

The inventors used multiple motor-operated valves for measuring voltages generated in the stators by the rotation of the rotors (i.e., voltages induced in the stators due to electromagnetic induction) in initialization operations, and intensively studied the measurement results. As a result, the inventors found a difference between a waveform of the voltage measured before the rotation of the rotor is restricted by a stopper mechanism and a waveform of the voltage measured after the rotation of the rotor is restricted by the stopper mechanism. The inventors further found that the waveform of the voltage immediately after the motor-operated valve in a cold state starts an operation differs from the waveform of the voltage when the operation progressed and the motor-operated valve has warmed up. The inventors also found that the waveform exhibits consistent behavior when the motor-operated valve has warmed up. Based on these findings, the present invention was conceived.

To achieve the object above, a motor-operated valve control device according to an aspect of the present invention is provided for controlling a motor-operated valve including a valve body that has a valve port, a stepping motor that includes a rotor and a stator, a valve member that faces the valve port and moves toward the valve port when the rotor rotates in a first direction, and a stopper mechanism that restricts rotation of the rotor in the first direction when the rotor is at a reference position.

The motor-operated valve control device includes:

a rotation control unit configured to input a pulse to the stepping motor to rotate the rotor,

a voltage obtaining unit configured to obtain a voltage generated in the stator by the rotation of the rotor in the first direction,

a state determining unit configured to determine, based on a difference between a waveform of the voltage and a reference waveform of the voltage, whether the motor-operated valve is in a first-rotation restricted state where the rotation of the rotor in the first direction is restricted, and

a reference-waveform setting unit configured to set the reference waveform of the voltage.

The rotation control unit is configured to perform a second preparation operation for inputting a second preparation number of pulses to the stepping motor to rotate the rotor in a second direction and perform a first preparation operation, following the second preparation operation, for inputting a first preparation number of pulses to the stepping motor to rotate the rotor in the first direction. The first preparation number is less than or equal to the second preparation number.

The reference-waveform setting unit is configured to set the waveform of the voltage obtained by the voltage obtaining unit during the first preparation operation as the reference waveform of the voltage.

In the present invention, preferably, when the rotation control unit starts performing the first preparation operation, the reference waveform of the voltage is not yet set.

Preferably, the state determining unit is configured to start performing a determination operation after the reference waveform of the voltage is set by the reference-waveform setting unit, the determination operation being performed for determining whether the waveform of the voltage obtained by the voltage obtaining unit during the first preparation operation is similar to the reference waveform of the voltage.

Preferably, the reference-waveform setting unit is configured to:

when the number of pulses input to the stepping motor reaches K in the first preparation operation, set the waveform of the voltage obtained by the voltage obtaining unit as the reference waveform of the voltage, K being a natural number greater than or equal to one,

when the state determining unit determines in the determination operation that the waveform of the voltage is similar to the reference waveform of the voltage, set the waveform of the voltage used in the determination operation as the reference waveform of the voltage, and

when the state determining unit determines in the determination operation that the waveform of the voltage is not similar to the reference waveform of the voltage, maintain the reference waveform of the voltage.

In the present invention, preferably, the rotation control unit is configured to perform a positioning operation, following the first preparation operation, for inputting a pulse to the stepping motor to rotate the rotor in the first direction.

Preferably, the state determining unit is configured to perform the determination operation for determining whether the waveform of the voltage obtained by the voltage obtaining unit during the first preparation operation and during the positioning operation is similar to the reference waveform of the voltage.

In the present invention, preferably, the state determining unit is configured to, in the determination operation, calculate a difference-degree score indicating a degree of the difference between the waveform of the voltage and the reference waveform of the voltage, and determine, based on a result of comparing the difference-degree score with a similarity-degree score threshold, whether the waveform of the voltage is similar to the reference waveform of the voltage.

In the present invention, preferably, the reference waveform of the voltage is represented as a data table set for a first-direction pulse, the data table including a time point and a reference voltage at the time point that are associated with each other, the first-direction pulse being a pulse input to the stepping motor to rotate the rotor in the first direction.

Preferably, the voltage obtaining unit is configured to sequentially obtain voltages each of which is the voltage obtained in response to the first-direction pulse input to the stepping motor.

Preferably, the state determining unit is configured to calculate an intermediate value when the voltage obtaining unit obtains the voltage at an obtaining time in response to the first-direction pulse being input, the intermediate value being a squared value of a difference value between the voltage obtained at the obtaining time and the reference voltage associated with the time point corresponding to the obtaining time in the data table set for the first-direction pulse input to the stepping motor.

Preferably, the state determining unit is configured to calculate the difference-degree score by summing intermediate values each of which is the intermediate value calculated by using the voltage obtained by the voltage obtaining unit in response to the first-direction pulse being input.

In the present invention, preferably, the state determining unit is configured to calculate the difference-degree score by summing intermediate values each of which is the intermediate value calculated by using the voltage obtained by the voltage obtaining unit in a part of a time period from a starting point to an ending point of the first-direction pulse.

Preferably, the voltage obtained in the part of the time period includes a first voltage component due to back electromotive force generated by inductance of the stator and a second voltage component due to electromagnetic induction generated by the rotation of the rotor, the first voltage component being less than the second voltage component in magnitude.

In the present invention, preferably, when the rotation control unit starts performing the first preparation operation, a first reference waveform of the voltage and a second reference waveform of the voltage are not yet set.

Preferably, the state determining unit is configured to:

start performing a first determination operation after the first reference waveform of the voltage is set by the reference-waveform setting unit, the first determination operation being performed for determining whether the waveform of the voltage obtained by the voltage obtaining unit during the first preparation operation is similar to the first reference waveform of the voltage, and

start performing a second determination operation after the second reference waveform of the voltage is set by the reference-waveform setting unit, the second determination operation being performed for determining whether the waveform of the voltage obtained by the voltage obtaining unit during the first preparation operation is similar to the second reference waveform of the voltage.

Preferably, the reference-waveform setting unit is configured to:

when the number of pulses input to the stepping motor reaches K in the first preparation operation, set the waveform of the voltage obtained by the voltage obtaining unit as the first reference waveform of the voltage, K being a natural number greater than or equal to one,

when the state determining unit determines in the first determination operation that the waveform of the voltage is similar to the first reference waveform of the voltage, set the waveform of the voltage used in the first determination operation as the first reference waveform of the voltage,

when the state determining unit determines in the first determination operation that the waveform of the voltage is not similar to the first reference waveform of the voltage, maintain the first reference waveform of the voltage,

when the state determining unit determines for the first time in the first determination operation that the waveform of the voltage is not similar to the first reference waveform of the voltage, set the waveform of the voltage used in the first determination operation as the second reference waveform of the voltage,

when the state determining unit determines in the second determination operation that the waveform of the voltage is similar to the second reference waveform of the voltage, set the waveform of the voltage used in the second determination operation as the second reference waveform of the voltage,

when the state determining unit determines in the second determination operation that the waveform of the voltage is not similar to the second reference waveform of the voltage, maintain the second reference waveform of the voltage,

when the first preparation operation is finished and a count of setting the waveform of the voltage as the first reference waveform of the voltage is greater than a count of setting the waveform of the voltage as the second reference waveform of the voltage, set the first reference waveform of the voltage as the reference waveform of the voltage, and

when the first preparation operation is finished and the count of setting the waveform of the voltage as the second reference waveform of the voltage is greater than the count of setting the waveform of the voltage as the first reference waveform of the voltage, set the second reference waveform of the voltage as the reference waveform of the voltage.

In the present invention, preferably, the rotation control unit is configured to perform a positioning operation, following the first preparation operation, for inputting a pulse to the stepping motor to rotate the rotor in the first direction.

Preferably, the state determining unit is configured to start performing a determination operation when the positioning operation is started, the determination operation being performed for determining whether the waveform of the voltage obtained by the voltage obtaining unit during the positioning operation is similar to the reference waveform of the voltage.

Preferably, the reference-waveform setting unit is configured to:

when the state determining unit determines in the determination operation that the waveform of the voltage is similar to the reference waveform of the voltage, set the waveform of the voltage used in the determination operation as the reference waveform of the voltage, and

when the state determining unit determines in the determination operation that the waveform of the voltage is not similar to the reference waveform of the voltage, maintain the reference waveform of the voltage.

In the present invention, preferably, the reference-waveform setting unit is configured to, when the state determining unit determines in the first determination operation that the waveform of the voltage is similar to the first reference waveform of the voltage and determines in the second determination operation that the waveform of the voltage is similar to the second reference waveform of the voltage,

(1) when the waveform of the voltage used in the first and second determination operations is more similar to the first reference waveform of the voltage than to the second reference waveform of the voltage, set the waveform of the voltage used for these determinations as the first reference waveform of the voltage, and
(2) when the waveform of the voltage used in the first and second determination operations is more similar to the second reference waveform of the voltage than to the first reference waveform of the voltage, set the waveform of the voltage used for these determinations as the second reference waveform of the voltage.

In the present invention, preferably, the state determining unit is configured to:

in the first determination operation, calculate a first difference-degree score indicating a degree of difference between the waveform of the voltage and the first reference waveform of the voltage, and determine, based on a result of comparing the first difference-degree score with a similarity-degree score threshold, whether the waveform of the voltage is similar to the first reference waveform of the voltage, and
in the second determination operation, calculate a second difference-degree score indicating a degree of difference between the waveform of the voltage and the second reference waveform of the voltage, and determine, based on a result of comparing the second difference-degree score with the similarity-degree score threshold, whether the waveform of the voltage is similar to the second reference waveform of the voltage.

In the present invention, preferably, the rotation control unit is configured to perform the second and first preparation operations multiple times.

Preferably, the reference-waveform setting unit is configured to set the waveform of the voltage obtained by the voltage obtaining unit during the first preparation operation performed most recently as the reference waveform of the voltage.

In the present invention, preferably, the rotation control unit is configured to perform a positioning operation, following the first preparation operation, for inputting a pulse to the stepping motor to rotate the rotor in the first direction.

Preferably, the rotation control unit is configured to stop inputting the pulse to the stepping motor when the state determining unit determines in the positioning operation that the motor-operated valve is in the first-rotation restricted state.

Preferably, the state determining unit is configured to determine that the motor-operated valve has failed when the number of pulses input to the stepping motor in the first preparation and positioning operations exceeds an initialization number that is a sufficient number to position the rotor at the reference position.

In the present invention, preferably, the stator includes an A-phase stator and a B-phase stator.

Preferably, the voltage obtaining unit is configured to obtain the voltage generated in one of the A-phase and B-phase stators when the rotation control unit supplies a driving current only to the other of the A-phase and B-phase stators in response to a pulse input to the stepping motor.

To achieve the object above, a motor-operated valve control device according to another aspect of the present invention is provided for controlling a motor-operated valve including a valve body that has a valve port, a stepping motor that includes a rotor and a stator, a valve member that faces the valve port and moves toward the valve port when the rotor rotates in a first direction, and a stopper mechanism that restricts rotation of the rotor in the first direction when the rotor is at a reference position.

The motor-operated valve control device includes:

a rotation control unit configured to input a pulse to the stepping motor to rotate the rotor,
a current obtaining unit configured to obtain a current generated in the stator by the rotation of the rotor in the first direction,
a state determining unit configured to determine, based on a difference between a waveform of the current and a reference waveform of the current, whether the motor-operated valve is in a first-rotation restricted state where the rotation of the rotor in the first direction is restricted, and
a reference-waveform setting unit configured to set the reference waveform of the current.

The rotation control unit is configured to perform a second preparation operation for inputting a second preparation number of pulses to the stepping motor to rotate the rotor in a second direction and perform a first preparation operation, following the second preparation operation, for inputting a first preparation number of pulses to the stepping motor to rotate the rotor in the first direction. The first preparation number is less than or equal to the second preparation number.

The reference-waveform setting unit is configured to set the waveform of the current obtained by the current obtaining unit during the first preparation operation as the reference waveform of the current.

To achieve the object above, a motor-operated valve device according to another aspect of the present invention includes the motor-operated valve and the motor-operated valve control device.

To achieve the object above, a method according to another aspect of the present invention is provided for controlling a motor-operated valve including a valve body that has a valve port, a stepping motor that includes a rotor and a stator, a valve member that faces the valve port and moves toward the valve port when the rotor rotates in a first direction, and a stopper mechanism that restricts rotation of the rotor in the first direction when the rotor is at a reference position.

The method includes:

a second preparation step for inputting a second preparation number of pulses to the stepping motor to rotate the rotor in a second direction,

a first preparation step, following the second preparation step, for inputting a first preparation number of pulses to the stepping motor to rotate the rotor in the first direction, the first preparation number being less than or equal to the second preparation number,

a positioning step, following the first preparation step, for inputting a pulse to the stepping motor to rotate the rotor in the first direction,

a voltage obtaining step for obtaining a voltage generated in the stator by the rotation of the rotor in the first direction,

a reference-waveform setting step for setting a waveform of the voltage obtained during the first preparation step as a reference waveform of the voltage, and

a state determining step for determining, based on a difference between the waveform of the voltage obtained during the positioning step and the reference waveform of the voltage, whether the motor-operated valve is in a first-rotation restricted state where the rotation of the rotor in the first direction is restricted.

To achieve the object above, a method according to another aspect of the present invention is provided for controlling a motor-operated valve including a valve body that has a valve port, a stepping motor that includes a rotor and a stator, a valve member that faces the valve port and moves toward the valve port when the rotor rotates in a first direction, and a stopper mechanism that restricts rotation of the rotor in the first direction when the rotor is at a reference position.

The method includes:

a second preparation step for inputting a second preparation number of pulses to the stepping motor to rotate the rotor in a second direction,

a first preparation step, following the second preparation step, for inputting a first preparation number of pulses to the stepping motor to rotate the rotor in the first direction, the first preparation number being less than or equal to the second preparation number,

a positioning step, following the first preparation step, for inputting a pulse to the stepping motor to rotate the rotor in the first direction,

a current obtaining step for obtaining a current generated in the stator by the rotation of the rotor in the first direction,

a reference-waveform setting step for setting a waveform of the current obtained during the first preparation step as a reference waveform of the current, and

a state determining step for determining, based on a difference between the waveform of the current obtained during the positioning step and the reference waveform of the current, whether the motor-operated valve is in a first-rotation restricted state where the rotation of the rotor in the first direction is restricted.

Advantageous Effects of Invention

According to one aspect of the present invention, the motor-operated valve control device inputs the second preparation number of pulses to the stepping motor to rotate the rotor in the second direction (the second preparation operation). Following the second preparation operation, the motor-operated valve control device inputs the first preparation number of pulses to the stepping motor to rotate the rotor in the first direction (the first preparation operation). The first preparation number is less than or equal to the second preparation number. The motor-operated valve control device obtains the voltage generated in the stator by the rotation of the rotor in the first direction. The motor-operated valve control device sets the waveform of the voltage obtained during the first preparation operation as the reference waveform of the voltage. The motor-operated valve control device determines, based on the difference between the waveform of the voltage and the reference waveform of the voltage, whether the motor-operated valve is in the first-rotation restricted state where the rotation of the rotor in the first direction is restricted.

According to another aspect of the present invention, the motor-operated valve control device inputs the second preparation number of pulses to the stepping motor to rotate the rotor in the second direction (the second preparation operation). Following the second preparation operation, the motor-operated valve control device inputs the first preparation number of pulses to the stepping motor to rotate the rotor in the first direction (the first preparation operation). The first preparation number is less than or equal to the second preparation number. The motor-operated valve control device obtains the current generated in the stator by the rotation of the rotor in the first direction. The motor-operated valve control device sets the waveform of the current obtained during the first preparation operation as the reference waveform of the current. The motor-operated valve control device determines, based on the difference between the waveform of the current and the reference waveform of the current, whether the motor-operated valve is in the first-rotation restricted state where the rotation of the rotor in the first direction is restricted.

With each of these configurations, when the motor-operated valve control device determines that the motor-operated valve capable of normal operation is in the first-rotation restricted state, the rotor is at the reference position. As a result, the motor-operated valve control device stops the rotation of the rotor in the first direction when determining that the motor-operated valve is in the first-rotation restricted state, thereby enabling the duration of the initialization operation to be reduced. Additionally, a long-lasting noise after the rotor is positioned at the reference position can be suppressed.

The motor-operated valve control device determines the state of the motor-operated valve based on the difference between the waveform of the voltage and the reference waveform of the voltage. As a result, the state of the motor-operated valve can be determined more accurately than with a configuration in which the state of the motor-operated valve is determined based on the area or maximum amplitude of the waveform of the voltage.

The motor-operated valve control device sets, as the reference waveform of the voltage, the waveform of the voltage obtained at a point after some time has elapsed from the start of an operation of the motor-operated valve. As a result, the waveform of the voltage, which is obtained by actually using the motor-operated valve and exhibits relatively consistent behavior, can be set as the reference waveform of the voltage, thereby determining the state of the motor-operated valve more accurately.

The configuration in which the motor-operated valve control device uses the waveform of the current instead of the waveform of the voltage has the same functions and effects as those of the configuration in which the motor-operated valve control device uses the waveform of the voltage.

Brief Description of Drawings

[Fig. 1] Fig. 1 is a block diagram of an air conditioner including a motor-operated valve device.

[Fig. 2] Fig. 2 is a sectional view of the motor-operated valve device in Fig. 1.

[Fig. 3] Fig. 3 is a diagram illustrating a valve stem holder of the motor-operated valve device in Fig. 2.

[Fig. 4] Fig. 4 is a side view of a guide bush of the motor-operated valve device in Fig. 2.

[Fig. 5] Fig. 5 is a diagram illustrating a stopper member of the motor-operated valve device in Fig. 2.

[Fig. 6] Fig. 6 is a plan view of the valve stem holder, the stopper member, a rotor, and a stator of the motor-operated valve device in Fig. 2.

[Fig. 7] Fig. 7 is a diagram illustrating a computer, a motor driver, and a stepping motor of the motor-operated valve device in Fig. 2.

[Fig. 8] Fig. 8 is a diagram schematically illustrating a positional relationship between magnetic poles of the rotor and pole teeth of the stator (when pulse P[1] is input).

[Fig. 9] Fig. 9 is a diagram schematically illustrating the positional relationship between the magnetic poles of the rotor and the pole teeth of the stator (when pulse P[2] is input).

[Fig. 10] Fig. 10 is a diagram schematically illustrating the positional relationship between the magnetic poles of the rotor and the pole teeth of the stator (when pulse P[3] is input).

[Fig. 11] Fig. 11 is a diagram schematically illustrating the positional relationship between the magnetic poles of the rotor and the pole teeth of the stator (when pulse P[4] is input).

[Fig. 12] Fig. 12 is a diagram schematically illustrating the positional relationship between the magnetic poles of the rotor and the pole teeth of the stator (when pulse P[5] is input).

[Fig. 13] Fig. 13 is a diagram schematically illustrating the positional relationship between the magnetic poles of the rotor and the pole teeth of the stator (when pulse P[6] is input).

[Fig. 14] Fig. 14 is a diagram schematically illustrating the positional relationship between the magnetic poles of the rotor and the pole teeth of the stator (when pulse P[7] is input).

[Fig. 15] Fig. 15 is a diagram schematically illustrating the positional relationship between the magnetic poles of the rotor and the pole teeth of the stator (when pulse P[8] is input).

[Fig. 16] Fig. 16 is a diagram illustrating an example of a waveform of a voltage generated in the stator by the rotation of the rotor when the motor-operated valve is in a first-rotation permitted state and is in a cold state.

[Fig. 17] Fig. 17 is a diagram illustrating an example of the waveform of the voltage generated in the stator by the rotation of the rotor when the motor-operated valve is in the first-rotation permitted state and has warmed up.

[Fig. 18] Fig. 18 is a diagram illustrating an example of the waveform of the voltage generated in the stator by the rotation of the rotor when the motor-operated valve is in the first-rotation permitted state and has sufficiently warmed up.

[Fig. 19] Fig. 19 is a diagram illustrating an example of the waveform of the voltage generated in the stator by the rotation of the rotor when the motor-operated valve is in the first-rotation restricted state.

[Fig. 20] Fig. 20 is a diagram illustrating an example of a data table of a reference waveform of the voltage.

[Fig. 21] Fig. 21 is a diagram illustrating an example of the waveform of the voltage and the reference waveform of the voltage.

[Fig. 22] Fig. 22 is a flowchart illustrating Operation example 1 of a motor-operated valve control device according to an embodiment of the present invention.

[Fig. 23] Fig. 23 is a flowchart illustrating Operation example 1 (second preparation operation).

[Fig. 24] Fig. 24 is a flowchart illustrating Operation example 1 (first preparation operation).

[Fig. 25] Fig. 25 is a flowchart illustrating Operation example 1 (first preparation operation, following the flowchart in Fig. 24).

[Fig. 26] Fig. 26 is a flowchart illustrating Operation example 1 (positioning operation).

[Fig. 27] Fig. 27 is a flowchart illustrating Operation example 2 of the motor-operated valve control device according to an embodiment of the present invention.

[Fig. 28] Fig. 28 is a flowchart illustrating Operation example 2 (first preparation operation).

[Fig. 29] Fig. 29 is a flowchart illustrating Operation example 2 (first preparation operation, following the flowchart in Fig. 28).

[Fig. 30] Fig. 30 is a flowchart illustrating Operation example 2 (first preparation operation, following the flowchart in Fig. 29).

Description of Embodiments

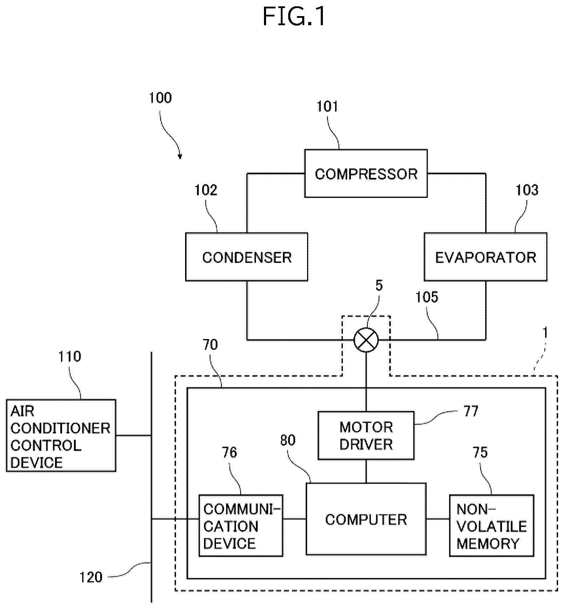

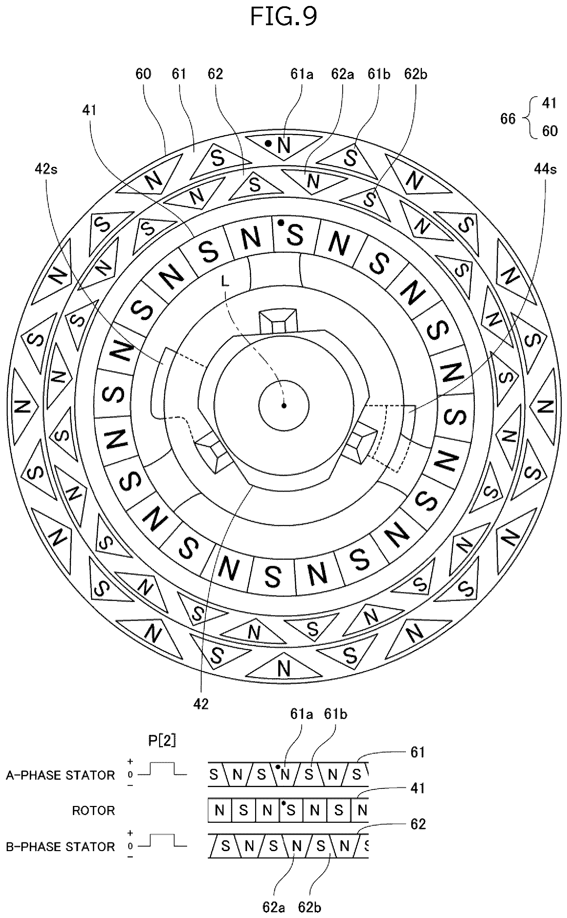

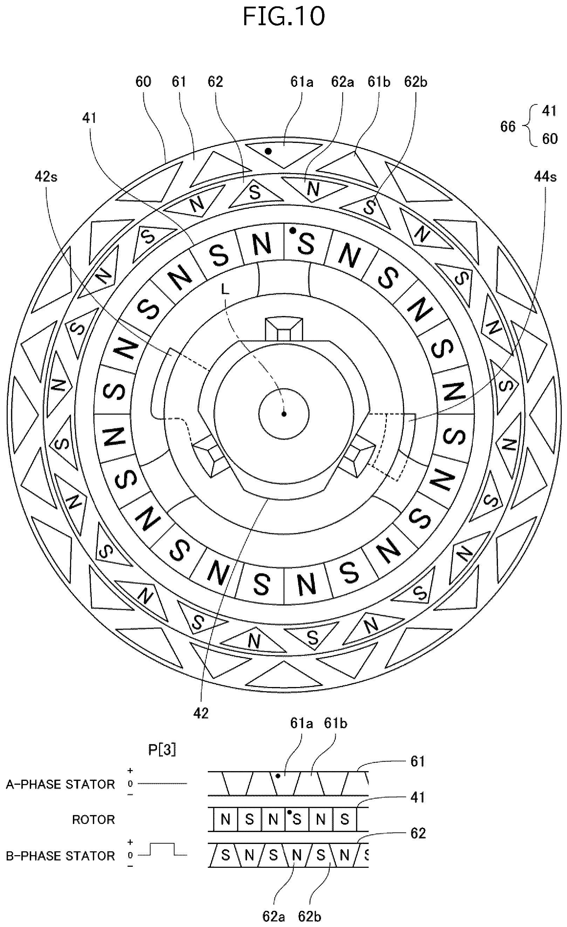

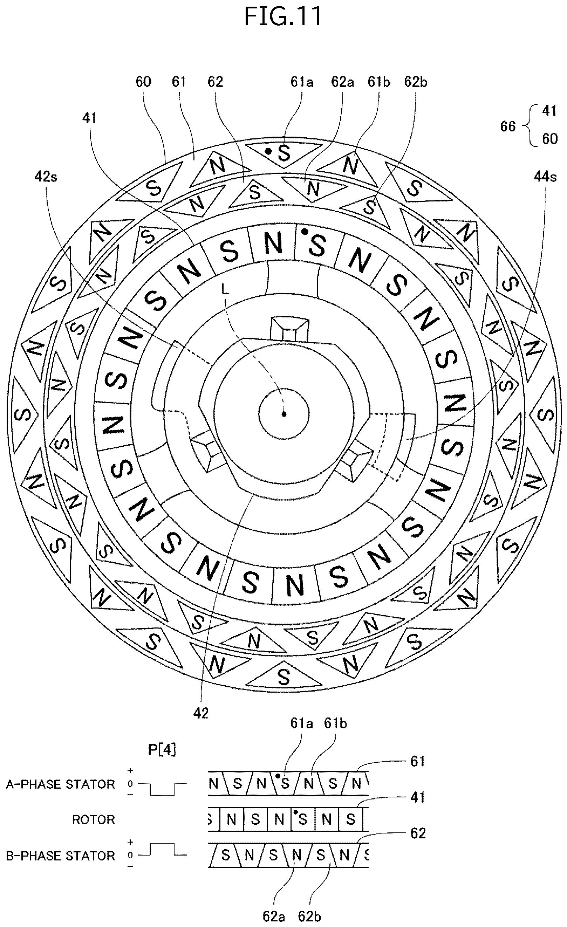

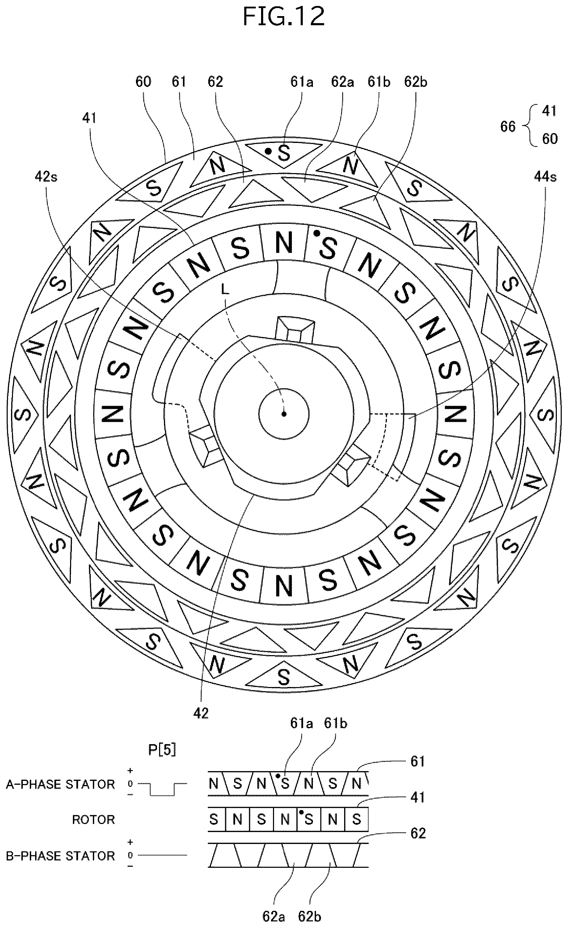

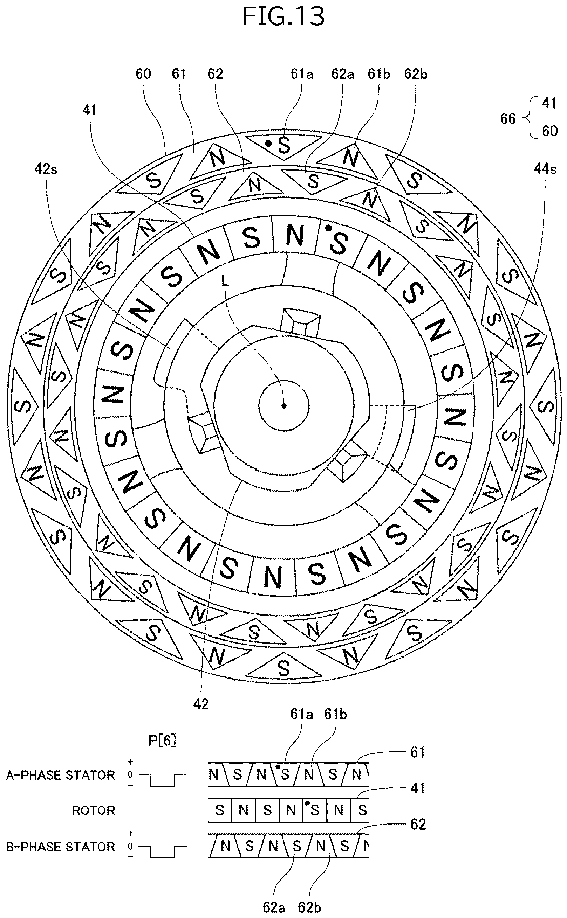

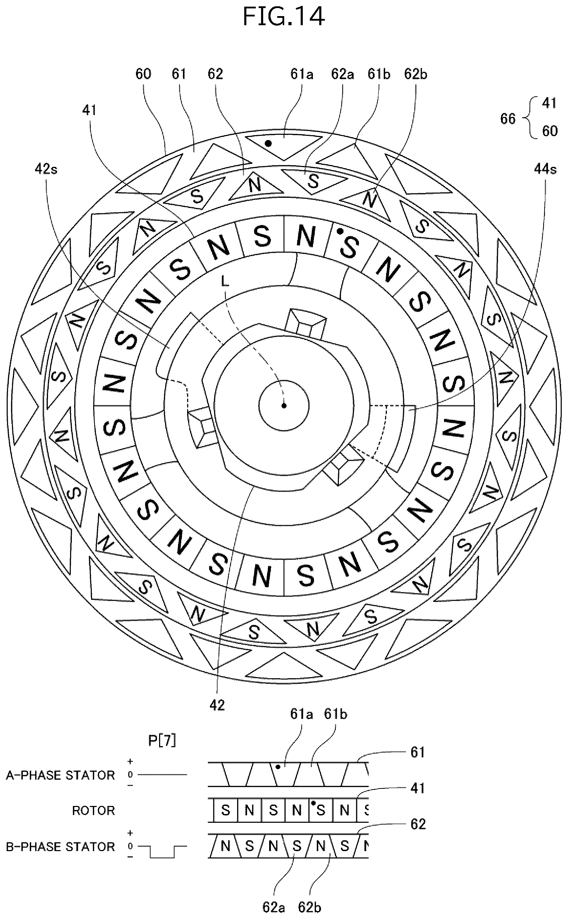

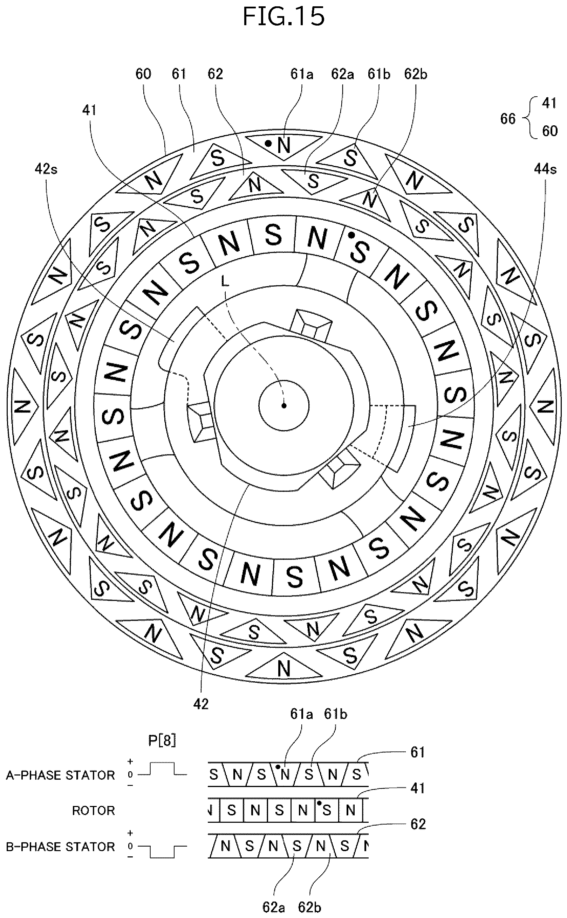

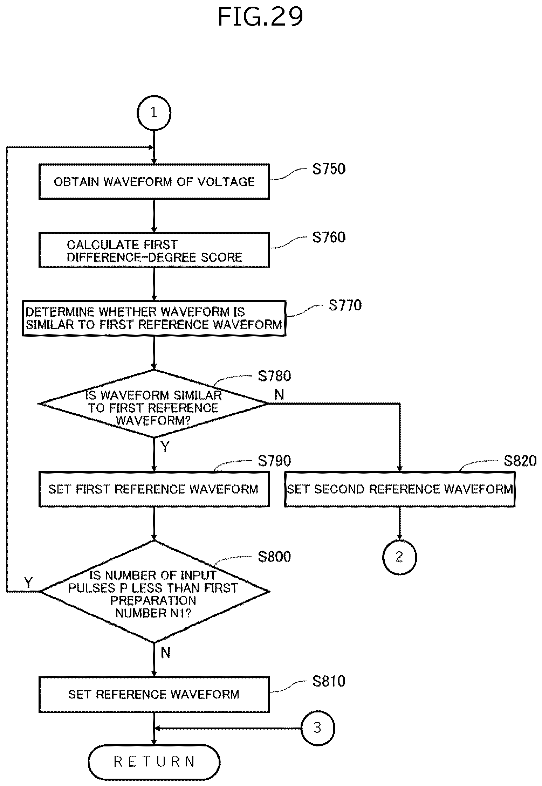

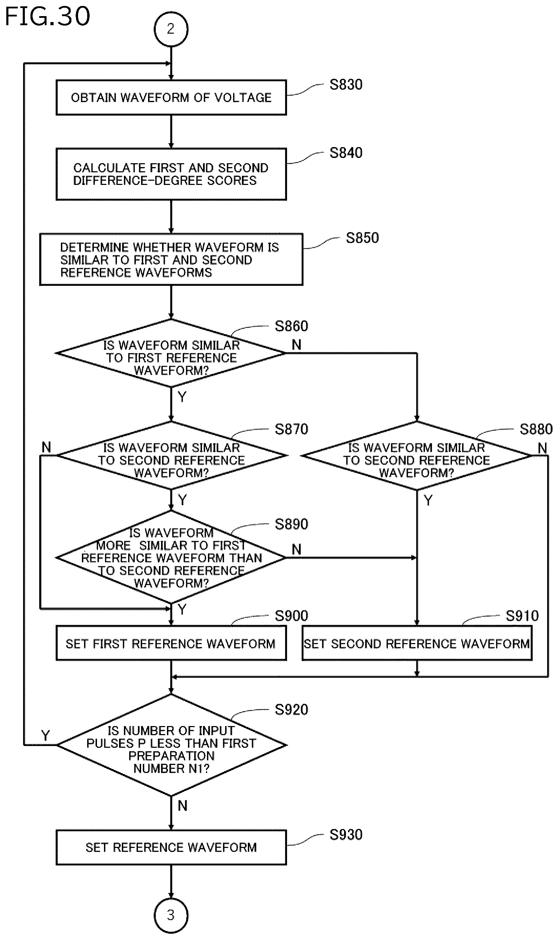

A motor-operated valve device is described below with reference to Figs. 1 to 30.

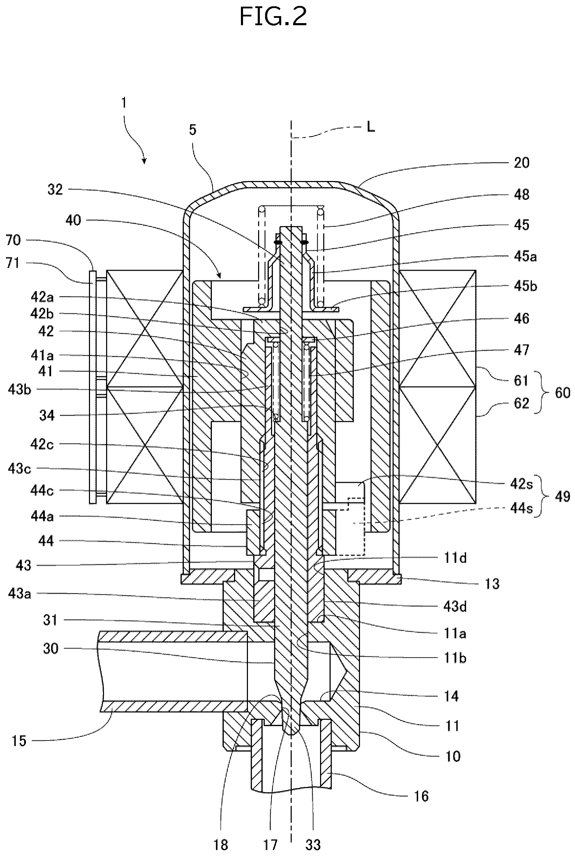

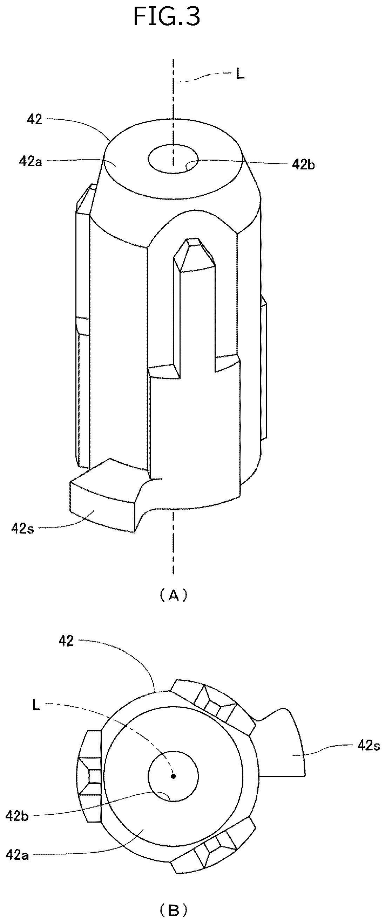

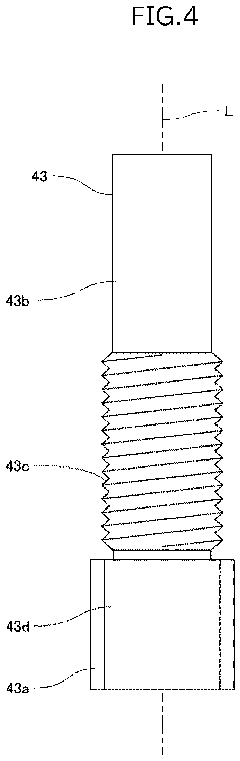

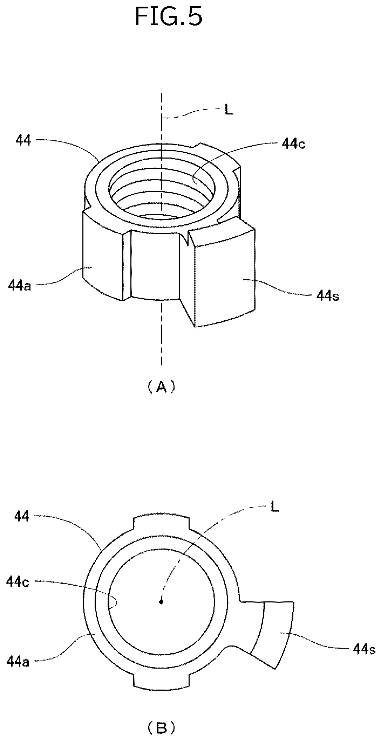

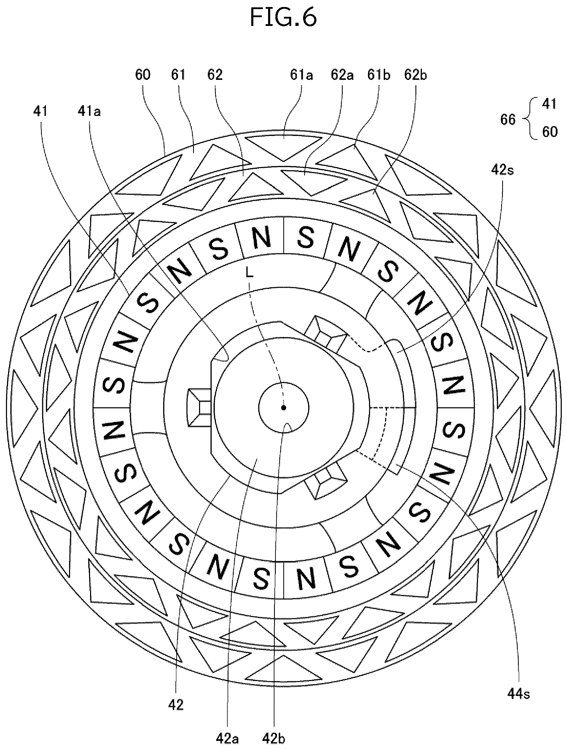

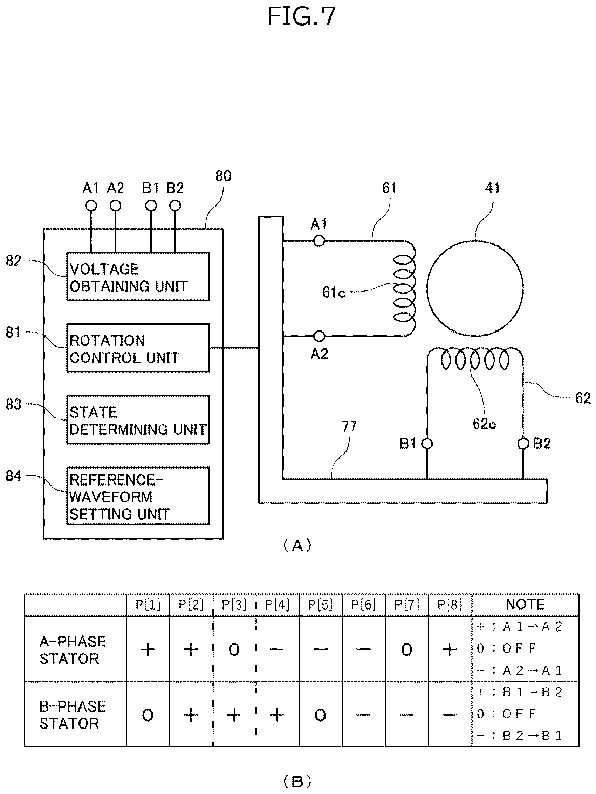

Fig. 1 is a block diagram of an air conditioner including a motor-operated valve device. Fig. 2 is a sectional view of the motor-operated valve device in Fig. 1. Fig. 3 is a diagram illustrating a valve stem holder of the motor-operated valve device in Fig. 2. Fig. 3A is a perspective view of the valve stem holder. Fig. 3B is a plan view of the valve stem holder. Fig. 4 is a side view of a guide bush of the motor-operated valve device in Fig. 2. Fig. 5 is a diagram illustrating a stopper member of the motor-operated valve device in Fig. 2. Fig. 5A is a perspective view of the stopper member. Fig. 5B is a plan view of the stopper member. Fig. 6 is a plan view of the valve stem holder, the stopper member, a rotor, and a stator of the motor-operated valve device in Fig. 2. Fig. 6 schematically illustrates the stator and magnetic poles of the rotor. Fig. 7 is a diagram illustrating a computer, a motor driver, and a stepping motor of the motor-operated valve device in Fig. 2. Fig. 7A schematically illustrates connections between the computer and motor driver of a motor-operated valve control device, and the stepping motor. Fig. 7B shows an example of correspondence between pulses and driving currents supplied to the stator by the motor driver.

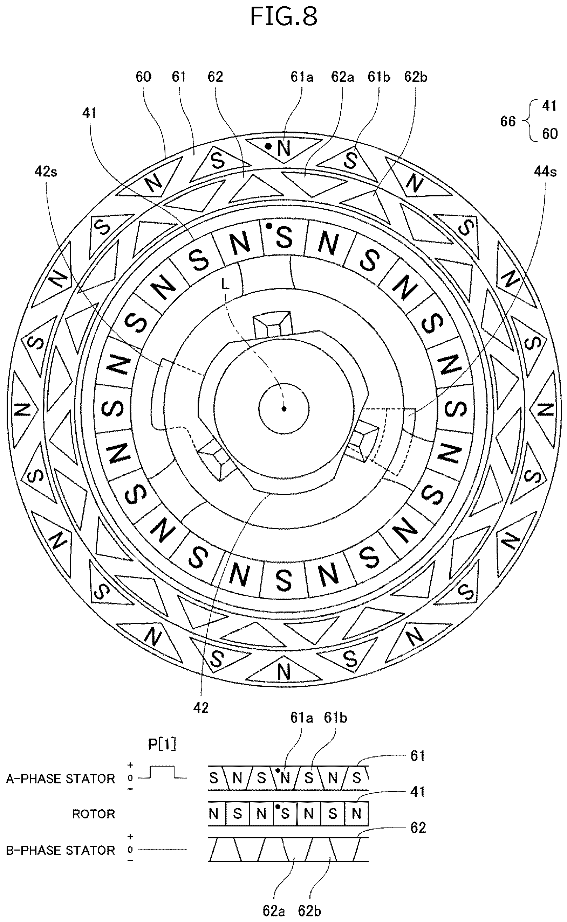

Figs. 8 to 15 are diagrams schematically illustrating positional relationships between the magnetic poles of the rotor and pole teeth of the stator. Figs. 8 to 15 show when pulses P[1] to P[8] are input to the stepping motor. Figs. 8 to 15 schematically illustrate the stator and the magnetic poles of the rotor.

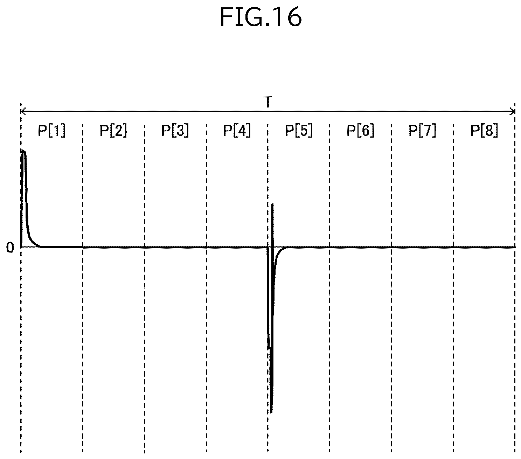

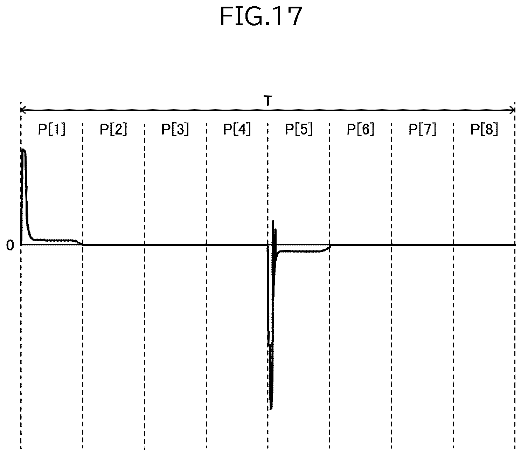

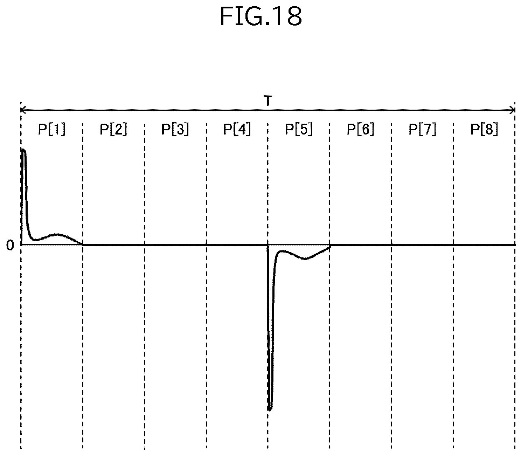

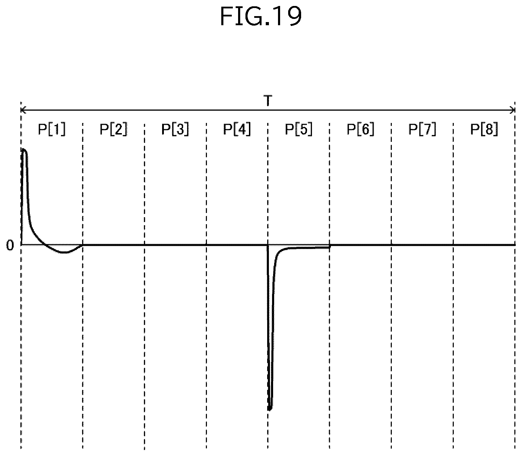

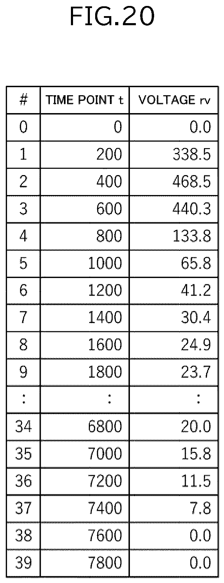

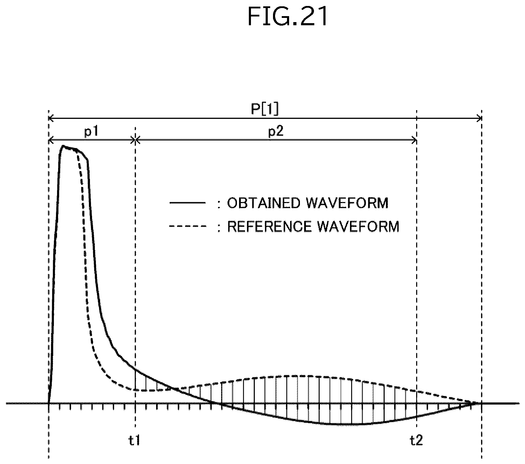

Figs. 16 to 19 are diagrams illustrating examples of a waveform of a voltage generated in the stator by the rotation of the rotor. Fig. 16 is a diagram illustrating an example of the waveform of the voltage when the motor-operated valve is in a first-rotation permitted state and is in a cold state. Fig. 17 is a diagram illustrating an example of the waveform of the voltage when the motor-operated valve is in the first-rotation permitted state and has warmed up. Fig. 18 is a diagram illustrating an example of the waveform of the voltage when the motor-operated valve is in the first-rotation permitted state and has sufficiently warmed up. Fig. 19 is a diagram illustrating an example of the waveform of the voltage when the motor-operated valve is in a first-rotation restricted state. Fig. 20 is a diagram illustrating an example of a data table of a reference waveform of the voltage. Fig. 21 is a diagram illustrating an example of the waveform of the voltage and the reference waveform of the voltage.

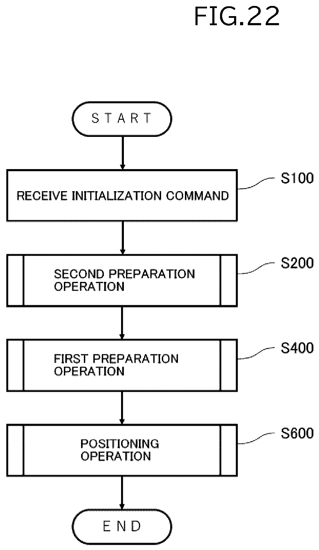

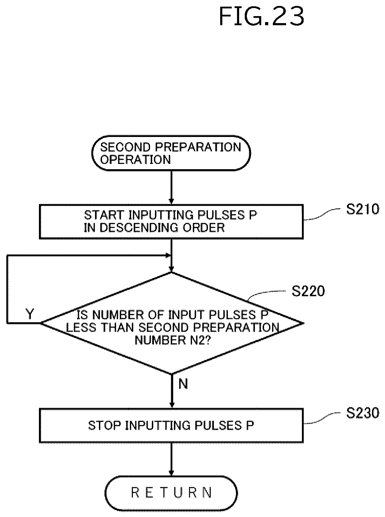

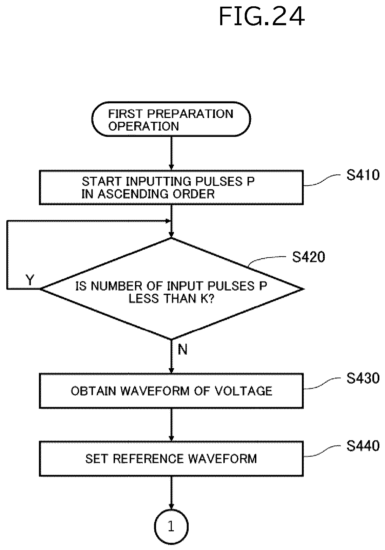

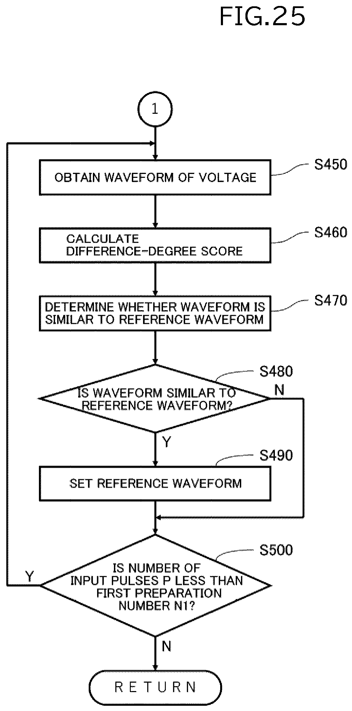

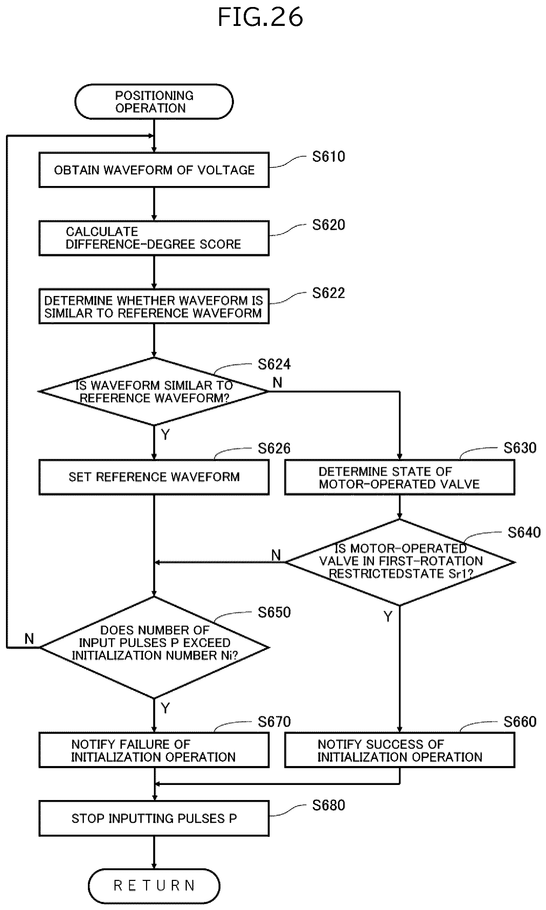

Figs. 22 to 26 are flowcharts illustrating Operation example 1 of the motor-operated valve control device according to an embodiment of the present invention. Fig. 22 shows a main routine of Operation example 1. Fig. 23 shows a second preparation operation of Operation example 1. Figs. 24 and 25 show a first preparation operation of Operation example 1. Fig. 26 shows a positioning operation of Operation example 1.

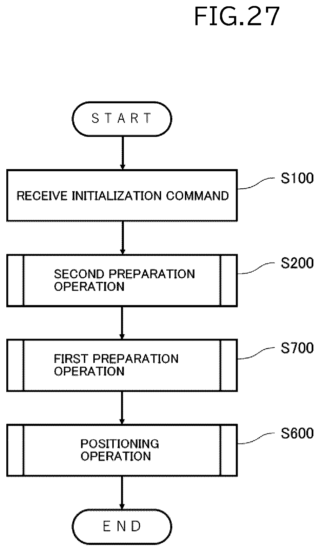

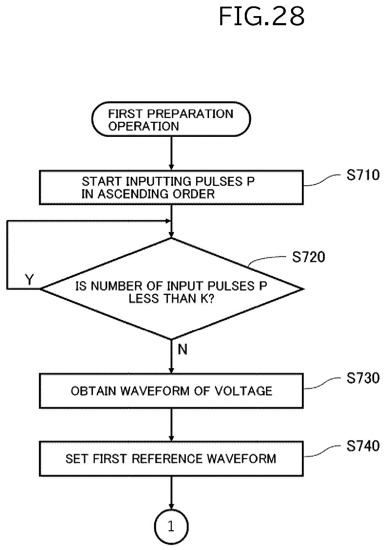

Figs. 27 to 30 are flowcharts illustrating Operation example 2 of the motor-operated valve control device according to an embodiment of the present invention. Fig. 27 shows a main routine of Operation example 2. Figs. 28 to 30 show a first preparation operation of Operation example 2.

A motor-operated valve device 1 according to the embodiment is used as, for example, a flow control valve for controlling the flow rate of refrigerant as fluid in a refrigeration cycle system of an air conditioner.

Fig. 1 illustrates an example of an air conditioner 100 mounted in a vehicle. The air conditioner 100 includes a compressor 101, a condenser 102, the motor-operated valve device 1 (including a motor-operated valve 5), and an evaporator 103, which are connected in this order by a pipe 105. The motor-operated valve device 1 functions as an expansion valve. The air conditioner 100 includes an air conditioner control device 110. The air conditioner control device 110 is connected to the motor-operated valve device 1 and can communicate with the motor-operated valve device 1. The air conditioner control device 110 uses the motor-operated valve device 1 to control the flow rate of refrigerant flowing through the pipe 105.

As illustrated in Fig. 2, the motor-operated valve device 1 includes the motor-operated valve 5 and a motor-operated valve control device 70.

The motor-operated valve 5 includes a valve body 10, a can 20, a valve member 30, a driving mechanism 40, and a stator 60.

The valve body 10 includes a body member 11 and a connection member 13. The body member 11 has a circular columnar shape. The body member 11 has a valve chamber 14, a valve port 17, and a valve seat 18. A first conduit 15 and a second conduit 16 are bonded to the body member 11. The first conduit 15 is disposed in a direction (a lateral direction in Fig. 2) perpendicular to an axis L and is connected to the valve chamber 14. The second conduit 16 is disposed in a direction (an up-and-down direction in Fig. 2) of the axis L and is connected to the valve chamber 14 via the valve port 17. The valve port 17 is enclosed by the valve seat 18, which has a circular annular shape, in the valve chamber 14. The body member 11 has a fitting hole 11a, which has a circular shape. The fitting hole 11a is provided in the upper end surface of the body member 11. The inner circumferential surface of the fitting hole 11a includes a planar part 11d facing leftward in Fig. 2. A through hole 11b is provided at the bottom of the fitting hole 11a and communicates with the valve chamber 14. The connection member 13 has a circular annular plate-like shape. The inner peripheral edge of the connection member 13 is bonded to the upper end of the body member 11. The body member 11 and the connection member 13 are made of a metal, such as an aluminum alloy, stainless steel, or brass.

The can 20 is made of a metal, such as stainless steel. The can 20 has a circular cylindrical shape. The can 20 is open at the lower end and is closed at the upper end. The lower end of the can 20 is bonded to the outer peripheral edge of the connection member 13.

The valve member 30 includes a first stem portion 31, a second stem portion 32, and a plug portion 33. The first stem portion 31 has a circular columnar shape. The second stem portion 32 has a circular columnar shape. The diameter of the second stem portion 32 is smaller than the diameter of the first stem portion 31. The second stem portion 32 is connected to the upper end of the first stem portion 31 and is coaxial with the first stem portion 31. The valve member 30 has a step portion 34, which is a circular annular plane facing upward. The step portion 34 is provided in the part where the second stem portion 32 is connected to the first stem portion 31. The plug portion 33 has a substantially conical shape with a diameter decreasing from top to bottom. The plug portion 33 is connected to the lower end of the first stem portion 31 and is coaxial with the first stem portion 31. The plug portion 33 is disposed in the valve port 17. A variable throttle passage is formed between the plug portion 33 and the valve port 17. The plug portion 33 faces the valve port 17 and the valve seat 18. The valve port 17 is closed when the plug portion 33 is in contact with the valve seat 18. The valve port 17 is open when the plug portion 33 is separated from the valve seat 18.

The driving mechanism 40 moves the valve member 30 in the up-and-down direction (the direction of the axis L). The movement of the valve member 30 opens and closes the valve port 17. The driving mechanism 40 includes a rotor 41, a valve stem holder 42, a guide bush 43, a stopper member 44, and a fixed member 45.

The rotor 41 has a circular cylindrical shape. The outer diameter of the rotor 41 is slightly smaller than the inner diameter of the can 20. The rotor 41 is disposed inside the can 20. The rotor 41 is rotatable with respect to the valve body 10. The rotor 41 has a plurality of north (N) poles and a plurality of south (S) poles. The N poles and the S poles are disposed on the outer circumferential surface of the rotor 41. The N poles and the S poles each extend in the up-and-down direction. The N poles and the S poles are alternately arranged one after another at regular angular intervals in the circumferential direction. The rotor 41 has, for example, twelve N poles and twelve S poles. The angle between the N poles and the S poles adjacent to each other is 15 degrees.

Fig. 3 illustrates the valve stem holder 42. The valve stem holder 42 has a circular cylindrical shape. The valve stem holder 42 is open at the lower end. The valve stem holder 42 includes an upper wall portion 42a at the upper end. The upper wall portion 42a has a stem hole 42b. The valve stem holder 42 is fitted into a fitting hole 41a of the rotor 41. The valve stem holder 42 rotates together with the rotor 41. A movable stopper 42s is provided at the lower end of the outer circumferential surface of the valve stem holder 42. The movable stopper 42s is a protrusion extending radially outward. The second stem portion 32 of the valve member 30 is disposed in the stem hole 42b and is movable in the direction of the axis L. A washer 46 is disposed on the lower surface of the upper wall portion 42a of the valve stem holder 42. A valve closing spring 47 is disposed between the washer 46 and the step portion 34 of the valve member 30. The valve closing spring 47 is a coil spring and pushes the valve member 30 toward the valve seat 18. An internal thread 42c is provided on the inner circumferential surface of the valve stem holder 42. The movable stopper 42s is secured with respect to the rotor 41.

Fig.4 illustrates the guide bush 43. The guide bush 43 includes a base portion 43a and a support portion 43b. The base portion 43a has a circular cylindrical shape. The outer circumferential surface of the base portion 43a has a planar part 43d. The base portion 43a is press-fitted into the fitting hole 11a of the body member 11, and the planar part 43d is in contact with the planar part 11d of the fitting hole 11a. This allows the central axis of the guide bush 43 to be aligned with the central axis of the body member 11 on the axis L and allows the guide bush 43 to be properly positioned with respect to the body member 11 about the axis L. The support portion 43b has a circular cylindrical shape. The outer diameter of the support portion 43b is smaller than the outer diameter of the base portion 43a. The inner diameter of the support portion 43b is equal to the inner diameter of the base portion 43a. The support portion 43b is connected to the upper end of the base portion 43a and is coaxial with the base portion 43a. An external thread 43c is provided on the outer circumferential surface of the support portion 43b. The external thread 43c is screwed into the internal thread 42c of the valve stem holder 42. The first stem portion 31 of the valve member 30 is disposed inside the guide bush 43. The guide bush 43 supports the valve member 30 so that the valve member 30 is movable in the direction of the axis L.

Fig. 5 illustrates the stopper member 44. The stopper member 44 includes a stopper body 44a. The stopper body 44a has a circular cylindrical shape. An internal thread 44c is provided on the inner circumferential surface of the stopper body 44a. A fixed stopper 44s is provided on the outer circumferential surface of the stopper body 44a. The fixed stopper 44s is a protrusion extending radially outward. The internal thread 44c is engaged with the external thread 43c until the stopper body 44a comes into contact with the base portion 43a of the guide bush 43. As a result, the stopper member 44 is fixed to the guide bush 43. The fixed stopper 44s is secured with respect to the valve body 10.

The fixed member 45 includes a fixed portion 45a and a flange portion 45b. The fixed portion 45a has a stepped circular cylindrical shape. The second stem portion 32 of the valve member 30 is disposed inside the fixed portion 45a. The fixed portion 45a is bonded to the second stem portion 32. The flange portion 45b is connected to the lower end of the fixed portion 45a. A return spring 48 is disposed such that the return spring 48 encloses the fixed member 45. The return spring 48 is a coil spring.

The motor-operated valve 5 includes the driving mechanism 40 that uses the rotation of the rotor 41 without speed reduction. The motor-operated valve 5 may include, instead of the driving mechanism 40, a driving mechanism that has a speed reduction mechanism reducing the rotational speed of the rotor 41.

The stator 60 has a circular cylindrical shape. The stator 60 includes an A-phase stator 61 and a B-phase stator 62.

The A-phase stator 61 includes a plurality of claw-pole type pole teeth 61a and 61b in the inner circumference. The tips of the pole teeth 61a point downward, while the tips of the pole teeth 61b point upward. The pole teeth 61a and the pole teeth 61b are alternately arranged one after another at regular angular intervals in the circumferential direction. The A-phase stator 61 has, for example, twelve pole teeth 61a and twelve pole teeth 61b. The angle between the pole teeth 61a and the pole teeth 61b adjacent to each other is 15 degrees. When a coil 61c of the A-phase stator 61 is energized, the pole teeth 61a and the pole teeth 61b have opposite polarities.

The B-phase stator 62 includes a plurality of claw-pole type pole teeth 62a and 62b in the inner circumference. The tips of the pole teeth 62a point downward, while the tips of the pole teeth 62b point upward. The pole teeth 62a and the pole teeth 62b are alternately arranged one after another at regular angular intervals in the circumferential direction. The B-phase stator 62 has, for example, twelve pole teeth 62a and twelve pole teeth 62b. The angle between the pole teeth 62a and the pole teeth 62b adjacent to each other is 15 degrees. When a coil 62c of the B-phase stator 62 is energized, the pole teeth 62a and the pole teeth 62b have opposite polarities.

The A-phase stator 61 is disposed coaxially with the B-phase stator 62. The A-phase stator 61 is in contact with the B-phase stator 62. When viewed in the direction of the axis L, the angle between one of the pole teeth 61a of the A-phase stator 61 and one of the pole teeth 62a of the B-phase stator 62 adjacent to each other is 7.5 degrees. In other words, the B-phase stator 62 is located at a position where the B-phase stator 62 is rotated relatively to the A-phase stator 61 about the axis L by 7.5 degrees from the position where the pole teeth 61a and the pole teeth 62a are arranged in the direction of the axis L. As illustrated in Fig. 7A, terminals A1 and A2 of the coil 61c of the A-phase stator 61 and terminals B1 and B2 of the coil 62c of the B-phase stator 62 are connected to the motor-operated valve control device 70 (including a motor driver 77).

The can 20 is disposed inside the stator 60. The rotor 41 is disposed inside the can 20. The stator 60 and the rotor 41 are members of a stepping motor 66.

The rotor 41 is rotated by pulses P (P[1] to P[8]) input to the stepping motor 66. Specifically, the rotor 41 is rotated by driving currents, corresponding to the pulses P, supplied to the stator 60 of the stepping motor 66. In this specification, "inputting the pulses P to the stepping motor 66" is synonymous with "supplying the driving currents corresponding to the pulses P to the stator 60 of the stepping motor 66".

Pulses P[1] to P[8] illustrated in Fig. 7B are input to the stepping motor 66 in sequence. A combination of the driving current supplied to the A-phase stator 61 and the driving current supplied to the B-phase stator 62 differs for each pulse P. There are eight combinations, and this number is referred to as the number of patterns of the pulses P. "Pattern" is also referred to as "switching mode". The index numbers (1 to 8) of pulses P[1] to P[8] are pattern numbers for specifying pulses P[1] to P[8]. For example, the period of the pulse P is 8 milliseconds, and a single time period T consisting of pulses P[1] to P[8] is 64 milliseconds.

Figs. 8 to 15 illustrate examples of positional relationships between the rotor 41 and the stator 60 when pulses P[1] to P[8] are input. In Figs. 8 to 15, the reference pole tooth 61a and the reference magnetic pole (S pole) of the rotor 41 are marked with a dot to facilitate recognition of the positional relationship between the rotor 41 and the stator 60 (the A-phase stator 61 and the B-phase stator 62).

In rotating the rotor 41 in a first direction (clockwise in Figs. 8 to 15), the pulses P are cyclically input to the stepping motor 66 in ascending order (in the order from pulse P[1] to pulse P[8]). When the rotor 41 rotates in the first direction, the screw-feed action of the internal thread 42c of the valve stem holder 42 and the external thread 43c of the guide bush 43 moves the rotor 41 and the valve stem holder 42 downward. The rotor 41 (the valve stem holder 42) pushes the valve member 30 downward via the valve closing spring 47. The valve member 30 moves downward, and the plug portion 33 comes into contact with the valve seat 18. At this time, the rotor 41 is at a valve closing position Rc. When the rotor 41 at this position further rotates in the first direction, the valve closing spring 47 is compressed and the rotor 41 further moves downward. The valve member 30 does not move downward. When the movable stopper 42s of the valve stem holder 42 comes into contact with the fixed stopper 44s of the stopper member 44, the rotation of the rotor 41 in the first direction is restricted. At this time, the rotor 41 is at a reference position Rx. The movable stopper 42s and the fixed stopper 44s constitute a stopper mechanism 49 restricting the rotation of the rotor 41 in the first direction.

In rotating the rotor 41 in a second direction (counterclockwise in Figs. 8 to 15) opposite to the first direction, the pulses P are cyclically input to the stepping motor 66 in descending order (in the order from pulse P[8] to pulse P[1]). When the rotor 41 rotates in the second direction, the screw-feed action of the internal thread 42c of the valve stem holder 42 and the external thread 43c of the guide bush 43 moves the rotor 41 and the valve stem holder 42 upward. The rotor 41 (the valve stem holder 42) pushes the fixed member 45 upward. The valve member 30 moves upward together with the fixed member 45 and separates from the valve seat 18. A valve opening position Ro is defined as the position of the rotor 41 when the fluid flow rate at the valve port 17 (i.e., the opening degree of the valve port 17) is at a predetermined value in a predetermined flow-rate measuring environment. The predetermined value is appropriately set according to the configuration, the application, or similar factors of the motor-operated valve device 1. When the rotor 41 rotates in the second direction and reaches a full-open position Rz, the valve member 30 is positioned farthest from the valve port 17, and the opening degree of the valve port 17 reaches its maximum.

The number of the pulses P required to rotate the rotor 41 from the full-open position Rz to the reference position Rx is referred to as a stroke number Ns. In other words, when the rotor 41 is at the full-open position Rz in the motor-operated valve 5 and then Ns pulses P are input to the stepping motor 66, the rotor 41 is positioned at the reference position Rx. For example, the stroke number Ns is 500. The number of the pulses P required to rotate the rotor 41 from the reference position Rx to the full-open position Rz is also the stroke number Ns.

An initialization number Ni is set based on the stroke number Ns. The initialization number Ni is a sufficient number of the pulses P for rotating the rotor 41 from the full-open position Rz to the reference position Rx. In other words, when the rotor 41 is at any position and Ni pulses P are input to the stepping motor 66, the rotor 41 is positioned at the reference position Rx. For example, the initialization number Ni ranges from 1.05 to 1.3 times the stroke number Ns.

A second preparation number N2 and a first preparation number N1 are set based on the stroke number Ns. The second preparation number N2 and the first preparation number N1 are used in an initialization operation for positioning the rotor 41 at the reference position Rx. For example, the second preparation number N2 ranges from 0.05 to 0.3 times the stroke number Ns. The first preparation number N1 is equal to the second preparation number N2. The first preparation number N1 may be less than the second preparation number N2 and preferably ranges from 0.8 to 1 times the second preparation number N2.

In the motor-operated valve 5, the respective central axes of the valve port 17, the valve seat 18, the can 20, the valve member 30, the rotor 41, the valve stem holder 42, the guide bush 43, and the stator 60 (the A-phase stator 61 and the B-phase stator 62) are aligned with the axis L.

The motor-operated valve control device 70 includes a circuit board 71 on which electronic components (not illustrated) are mounted. As illustrated in Fig. 1, the motor-operated valve control device 70 includes a non-volatile memory 75, a communication device 76, the motor driver 77, and a computer 80. The motor-operated valve control device 70 controls the motor-operated valve 5 according to a command from the air conditioner control device 110.

The non-volatile memory 75 stores data required to be held even when power is turned off. The non-volatile memory 75 is, for example, EEPROM or flash memory.

The communication device 76 is connected to the air conditioner control device 110 via a wired communication bus 120 and can communicate with the air conditioner control device 110. The air conditioner 100 utilizes a communication system such as Local Interconnect Network (LIN) or Controller Area Network (CAN). The communication device 76 may be wirelessly connected to the air conditioner control device 110 and may wirelessly communicate with the air conditioner control device 110.

The motor driver 77 supplies the driving currents to the stepping motor 66 based on pulses P input from the computer 80. As illustrated in Fig. 7A, the motor driver 77 is connected to the terminals A1 and A2 of the coil 61c of the A-phase stator 61 and the terminals B1 and B2 of the coil 62c of the B-phase stator 62.

Fig. 7B illustrates an example of correspondence between the pulses P and the driving currents supplied by the motor driver 77. In Fig. 7B, (+) denotes supplying the driving current flowing from the terminal A1 to the terminal A2 or the driving current flowing from the terminal B1 to the terminal B2. (-) denotes supplying the driving current flowing from the terminal A2 to the terminal A1 or the driving current flowing from the terminal B2 to the terminal B1. (0) denotes supplying no driving current.

When pulse P[1] is input to the motor driver 77 by the computer 80, the motor driver 77 supplies the coil 61c with the driving current flowing from the terminal A1 to the terminal A2 (+) and supplies the coil 62c with no driving current (0).

When pulse P[2] is input to the motor driver 77 by the computer 80, the motor driver 77 supplies the coil 61c with the driving current flowing from the terminal A1 to the terminal A2 (+) and supplies the coil 62c with the driving current flowing from the terminal B1 to the terminal B2 (+).

When pulse P[3] is input to the motor driver 77 by the computer 80, the motor driver 77 supplies the coil 61c with no driving current (0) and supplies the coil 62c with the driving current flowing from the terminal B1 to the terminal B2 (+).

When pulse P[4] is input to the motor driver 77 by the computer 80, the motor driver 77 supplies the coil 61c with the driving current flowing from the terminal A2 to the terminal A1 (-) and supplies the coil 62c with the driving current flowing from the terminal B1 to the terminal B2 (+).

When pulse P[5] is input to the motor driver 77 by the computer 80, the motor driver 77 supplies the coil 61c with the driving current flowing from the terminal A2 to the terminal A1 (-) and supplies the coil 62c with no driving current (0).

When pulse P[6] is input to the motor driver 77 by the computer 80, the motor driver 77 supplies the coil 61c with the driving current flowing from the terminal A2 to the terminal A1 (-) and supplies the coil 62c with the driving current flowing from the terminal B2 to the terminal B1 (-).

When pulse P[7] is input to the motor driver 77 by the computer 80, the motor driver 77 supplies the coil 61c with no driving current (0) and supplies the coil 62c with the driving current flowing from the terminal B2 to the terminal B1 (-).

When pulse P[8] is input to the motor driver 77 by the computer 80, the motor driver 77 supplies the coil 61c with the driving current flowing from the terminal A1 to the terminal A2 (+) and supplies the coil 62c with the driving current flowing from the terminal B2 to the terminal B1 (-).

The computer 80 is a microcomputer for embedded devices and incorporates a CPU, ROM, RAM, an input/output interface, an analog-to-digital converter, and similar components in a single package. The computer 80 may incorporate the non-volatile memory 75, the communication device 76, and the motor driver 77. The CPU executes a program stored in the ROM, and the computer 80 consequently functions as a rotation control unit 81, a voltage obtaining unit 82, a state determining unit 83, and a reference-waveform setting unit 84. The computer 80 is a processor.

The rotation control unit 81 inputs the pulses P to the stepping motor 66 to rotate the rotor 41 in the first direction or the second direction. Specifically, the rotation control unit 81 receives the command from the air conditioner control device 110 and inputs pulses P[1] to P[8] to the motor driver 77 according to the command. The motor driver 77 supplies the driving currents to the coil 61c of the A-phase stator 61 and the coil 62c of the B-phase stator 62 in response to pulses P[1] to P[8] being input.

The voltage obtaining unit 82 obtains a voltage generated in the stator 60 by the rotation of the rotor 41, that is, a voltage induced in the stator 60 due to electromagnetic induction.

Specifically, the voltage obtaining unit 82 sequentially obtains voltages VB generated between the terminals B1 and B2 of the coil 62c of the B-phase stator 62 when the driving current is supplied only to the coil 61c of the A-phase stator 61 by the rotation control unit 81 in response to pulses P[1] and P[5]. The voltage obtaining unit 82 sequentially obtains voltages VA generated between the terminals A1 and A2 of the coil 61c of the A-phase stator 61 when the driving current is supplied only to the coil 62c of the B-phase stator 62 by the rotation control unit 81 in response to pulses P[3] and P[7]. The voltage obtaining unit 82 does not obtain any voltage VA or voltage VB when the driving currents are supplied to both the coil 61c and the coil 62c by the rotation control unit 81 in response to pulses P[2], P[4], P[6], and P[8]. In the following description, the phrase "voltage VA and voltage VB" is simply referred to as "voltage V".

The voltage obtaining unit 82 may sequentially obtain the voltages V when the driving currents are supplied by the rotation control unit 81 to the coil 61c and the coil 62c in response to pulses P[1] to P[8]. In this configuration, the voltage obtaining unit 82 separates a voltage component due to electromagnetic induction from the voltage generated between the terminals A1 and A2 and defines the voltage component as the voltage VA. The voltage obtaining unit 82 separates a voltage component due to electromagnetic induction from the voltage generated between the terminals B1 and B2 and defines the voltage component as the voltage VB.

The voltage obtaining unit 82 sequentially obtains the voltages V during a time period from the starting point to the ending point of the pulse P at predetermined sampling intervals. For example, the time period from the starting point to the ending point of the pulse P is 8 milliseconds, and the sampling interval is 200 microseconds. For example, the voltage obtaining unit 82 obtains 40 voltages V in response to a single pulse P[k] (where k = 1, 3, 5, or 7).

The voltages V sequentially obtained represent a waveform of the voltage V. In this specification, "waveform" refers to the variation in a physical quantity (voltage) over time at a fixed point. "Waveform" is visualized on a coordinate plane, with the vertical axis representing physical quantity and the horizontal axis representing time. The word "waveform" can also refer to non-visual representations, such as a data table that has physical quantity data associated with time data and is stored in the RAM of the computer 80 or the non-volatile memory 75. Additionally, "area of the waveform" refers to the area of the region enclosed by the waveform and the horizontal axis when the waveform is represented on the coordinate plane, where the vertical axis represents physical quantity and the horizontal axis both represents time and corresponds to the physical quantity of zero.

In the initialization operation, the state determining unit 83 determines the state of the motor-operated valve 5 based on the waveform of the voltage V obtained by the voltage obtaining unit 82. The motor-operated valve 5 has a first-rotation permitted state Sp1 and a first-rotation restricted state Sr1. The first-rotation permitted state Sp1 is a state where the rotor 41 has not reached the reference position Rx and where the rotation of the rotor 41 in the first direction is permitted. The first-rotation restricted state Sr1 is a state where the rotor 41 has reached the reference position Rx, where the movable stopper 42s is in contact with the fixed stopper 44s, and where the rotation of the rotor 41 in the first direction is restricted.

Figs. 16 to 19 illustrate examples of the waveform of the voltage VB when the rotor 41 rotates in the first direction (i.e., the motor-operated valve 5 is in operation). Fig. 16 illustrates an example of the waveform of the voltage VB immediately after the motor-operated valve 5 in the first-rotation permitted state Sp1 starts an operation, that is, when the motor-operated valve 5 is in the cold state. Fig. 17 illustrates an example of the waveform of the voltage VB as the operation of the motor-operated valve 5 in the first-rotation permitted state Sp1 has progressed, that is, when the motor-operated valve 5 has warmed up. Fig. 18 illustrates an example of the waveform of the voltage VB as the operation of the motor-operated valve 5 in the first-rotation permitted state Sp1 has further progressed, that is, when the motor-operated valve 5 has sufficiently warmed up. Fig. 19 illustrates an example of the waveform of the voltage VB in the motor-operated valve 5 in the first-rotation restricted state Sr1. In Figs. 16 to 19, the vertical axis corresponds to voltage and the horizontal axis corresponds to time.

The waveform of the voltage VB (Fig. 16) when the motor-operated valve 5 is in the cold state differs from the waveforms of the voltage VB (Figs. 17 and 18) when the motor-operated valve 5 has warmed up. The waveforms of the voltage VB (Figs. 16 and 17) gradually change their behavior until the motor-operated valve 5 has sufficiently warmed up. When the motor-operated valve 5 has sufficiently warmed up, the waveform of the voltage VB (Fig. 18) exhibits consistent behavior. It is presumed that this occurs because the stator 60 generates heat when the motor-operated valve 5 is in operation, thereby warming refrigerant inside the can 20 and lowering the viscosity of refrigerating machine oil contained in the refrigerant.

Additionally, the waveforms of the voltage VB (Figs. 16 to 18) when the motor-operated valve 5 is in the first-rotation permitted state Sp1 differ from the waveform of the voltage VB (Fig. 19) when the motor-operated valve 5 is in the first-rotation restricted state Sr1. Therefore, by setting the waveform of the voltage V when the motor-operated valve 5 has warmed up (preferably when it has sufficiently warmed up) as a reference waveform of the voltage V and comparing the waveform of the voltage V obtained after the reference waveform is set with the reference waveform, it is possible to determine whether the motor-operated valve 5 is in the first-rotation permitted state Sp1 or the first-rotation restricted state Sr1.

The state determining unit 83 determines the state of the motor-operated valve 5 by comparing the waveform of the voltage V with the reference waveform of the voltage V.

Additionally, the state determining unit 83 determines whether the waveform of the voltage V is similar to the reference waveform of the voltage V by comparing the waveform of the voltage V with the reference waveform of the voltage V. When the waveform of the voltage V is the same as the reference waveform of the voltage V, the state determining unit 83 also determines that "the waveform of the voltage V is similar to the reference waveform of the voltage V".

The reference-waveform setting unit 84 sets the reference waveform of the voltage V. The reference waveform of the voltage VA is set based on the voltage VA obtained by the voltage obtaining unit 82. The reference waveform of the voltage VB is set based on the voltage VB obtained by the voltage obtaining unit 82. The reference-waveform setting unit 84 stores the reference waveform of the voltage VA and the reference waveform of the voltage VB in the non-volatile memory 75. The reference-waveform setting unit 84 may store the reference waveform of the voltage VA and the reference waveform of the voltage VB in the RAM of the computer 80.

A single reference waveform of the voltage VA is set for each of pulses P[3] and P[7]. The reference waveform of the voltage VA is set based on the waveform of the voltage VA obtained when the driving current is supplied only to the coil 62c of the B-phase stator 62 in response to pulses P[3] or P[7] input to the stepping motor 66 to rotate the rotor 41 in the first direction.

A single reference waveform of the voltage VB is set for each of pulses P[1] and P[5]. The reference waveform of the voltage VB is set based on the waveform of the voltage VB obtained when the driving current is supplied only to the coil 61c of the A-phase stator 61 in response to pulses P[1] or P[5] input to the stepping motor 66 to rotate the rotor 41 in the first direction.

Pulses P[1], P[3], P[5], and P[7] that are input to the stepping motor 66 to rotate the rotor 41 in the first direction are each referred to as a first-direction pulse.

In the motor-operated valve device 1, the reference waveform of the voltage V is set for some of the pulses P (P[1], P[3], P[5], and P[7]), and is not set for the rest of the pulses P (P[2], P[4], P[6], and P[8]).

The reference waveform of the voltage V is stored in the non-volatile memory 75 as a data table.

Reference-waveform tables C[3] and C[7], which are the reference waveforms of the voltage VA set for pulses P[3] and P[7], are stored in the non-volatile memory 75. Reference-waveform tables C[1] and C[5], which are the reference waveforms of the voltage VB set for pulses P[1] and P[5], are stored in the non-volatile memory 75.

Fig. 20 illustrates an example of the reference-waveform table C[1]. In the data table, time points t, defined at predetermined intervals from the starting point (time point 0) of the pulse P, are each associated with a reference voltage rv at the corresponding time point t. The intervals between the time points t are equal to the sampling interval (200 microseconds) used by the voltage obtaining unit 82. A single data table includes 40 pairs of a time point t and a reference voltage rv. In Fig. 20, the unit of the time point t is a microsecond, and the unit of the reference voltage rv is a millivolt. The units of the time point t and the reference voltage rv may be proprietary units, such as units corresponding to the sampling interval and the resolution of the analog-to-digital converter of the motor-operated valve control device 70.

The state determining unit 83 calculates a value (referred to as a difference-degree score sv) indicating a degree of difference between the waveform of the voltage V obtained by the voltage obtaining unit 82 and the reference waveform of the voltage V. The greater the difference-degree score sv, the greater the degree of the difference between the waveform of the voltage V and the reference waveform of the voltage V. When the difference-degree score sv is greater than or equal to a predetermined difference-degree score threshold H, the waveform of the voltage V is determined to differ from the reference waveform of the voltage V. The difference-degree score sv is also a value (referred to as a similarity-degree score) indicating a degree of similarity between the waveform of the voltage V and the reference waveform of the voltage V. The smaller the difference-degree score sv, the greater the degree of the similarity between the waveform of the voltage V and the reference waveform of the voltage V. When the difference-degree score sv is less than or equal to a predetermined similarity-degree score threshold G, the waveform of the voltage V is determined to be similar to the reference waveform of the voltage V.

When a voltage v (i.e., the voltage V) is obtained by the voltage obtaining unit 82 at an obtaining time tv in response to pulse P[k] (where k = 1, 3, 5, or 7) being input, the state determining unit 83 reads the reference voltage rv associated with the time point t corresponding to the obtaining time tv from the data table (i.e., the reference-waveform table C[k]) of the reference waveform corresponding to pulse P[k]. The state determining unit 83 calculates a value (referred to as a difference value dv) by subtracting the reference voltage rv from the voltage v obtained by the voltage obtaining unit 82. The state determining unit 83 calculates a squared value (referred to as an intermediate value dv2) of the difference value dv. The state determining unit 83 calculates a difference-degree score sv[k] by summing the intermediate values dv2 calculated in response to pulse P[k] being input.

The state determining unit 83 calculates the difference-degree score sv[k] using the voltage v obtained by the voltage obtaining unit 82 during a part of the time period from the starting point to the ending point of pulse P[k]. Specifically, when a time period from the starting point of pulse P[k] to a time point t1 is defined as a first part p1 and a time period from the time point t1 to a time point t2 is defined as a second part p2, the state determining unit 83 calculates the difference-degree score sv[k] using the voltage v obtained during the second part p2. The time point t1 is after the starting point of pulse P[k]. The time point t2 is after the time point t1 and before the ending point of pulse P[k]. The time point t2 may coincide with the ending point of pulse P[k]. Fig. 21 illustrates an example of the waveform (in a solid line: "obtained waveform") of the voltage VB obtained in response to pulse P[1] being input and the reference waveform (in a dashed line) of the voltage VB. In Fig. 21, the length of each vertical line connecting the waveform of the voltage VB and the reference waveform of the voltage VB in the second part p2 corresponds to the difference value dv used for calculating the difference-degree score sv[1]. The state determining unit 83 does not use the voltage v in the first part p1 for calculating the difference-degree score sv[k].

The voltage v may include a voltage component (referred to as a first voltage component) due to back electromotive force generated by the inductance of the coil of the stator 60 and a voltage component (referred to as a second voltage component) due to electromagnetic induction generated by the rotation of the rotor 41. At a time point shortly after the starting point of pulse P[k], the magnitude of the first voltage component is greater than the magnitude of the second voltage component, and the magnitude of the first voltage component decreases as time passes. Therefore, the state determining unit 83 calculates the difference-degree score sv[k] using the voltage v obtained by the voltage obtaining unit 82 after a certain time passes from the starting point of pulse P[k]. Specifically, the state determining unit 83 calculates the difference-degree score sv[k] using the voltage v obtained by the voltage obtaining unit 82 after the magnitude of the first voltage component becomes less than the magnitude of the second voltage component. With this configuration, the proportion of the second voltage component is relatively high in the voltage v, resulting in a more accurate determination of the state of the motor-operated valve 5 by the state determining unit 83.

The duration of the first part p1 is set within a range from 5% to 50%, preferably from 20% to 30%, of the time period from the starting point to the ending point of pulse P[k]. The duration of the second part p2 is set within a range from 50% to 95%, preferably from 70% to 80%, of the time period from the starting point to the ending point of pulse P[k]. In the voltage v obtained by the voltage obtaining unit 82 during the second part p2, the voltage component due to back electromotive force generated by the inductance of the coil of the stator 60 is less than the voltage component due to electromagnetic induction generated by the rotation of the rotor 41. The state determining unit 83 may calculate the difference-degree score sv[k] using the voltage v obtained by the voltage obtaining unit 82 during the time period (the entire time period) from the starting point to the ending point of pulse P[k]. In this configuration, the time point t1 coincides with the starting point of pulse P[k], and the time point t2 coincides with the ending point of pulse P[k].

The difference-degree score sv is given by Expression (1) below, where v[tv] represents the voltage v obtained at an obtaining time tv during the time period from the time point t1 to the time point t2, and rv[tv] represents the reference voltage rv associated with the time point t corresponding to the obtaining time tv in the data table of the reference waveform.

$$sv = \sum_{tv=t1}^{t2} (v[tv] - rv[tv])^2 \quad \cdots \quad (1)$$

The state determining unit 83 determines the state of the motor-operated valve 5 based on the difference-degree score sv[k]. Specifically, the state determining unit 83 compares the difference-degree score sv[k] with the predetermined difference-degree score threshold H. The state determining unit 83 determines whether the motor-operated valve 5 is in the first-rotation permitted state Sp1 or the first-rotation restricted state Sr1, based on the result of comparing the difference-degree score sv[k] with the difference-degree score threshold H. When any one of pulses P[2], P[4], P[6], and P[8] for rotating the rotor 41 in the first direction is input to the stepping motor 66, the state determining unit 83 determines that the motor-operated valve 5 is in the first-rotation permitted state Sp1. The motor-operated valve control device 70 may have a difference-degree score threshold H[k] corresponding to the difference-degree score sv[k] for each value of "k". The difference-degree score threshold H[k] may have the same value for any "k" or may have a different value depending on "k".

The state determining unit 83 determines whether the waveform of the voltage V used for calculating the difference-degree score sv[k] is similar to the reference waveform of the voltage V. Specifically, the state determining unit 83 compares the difference-degree score sv[k] with the predetermined similarity-degree score threshold G. The state determining unit 83 determines whether the waveform of the voltage V is similar to the reference waveform of the voltage V, based on the result of comparing the difference-degree score sv[k] with the similarity-degree score threshold G. The motor-operated valve control device 70 may have a similarity-degree score threshold G[k] corresponding to the difference-degree score sv[k] for each value of "k". The similarity-degree score threshold G[k] may have the same value for any "k" or may have a different value depending on "k".

An example (Operation example 1) of the initialization operation of the motor-operated valve control device 70 is described below with reference to Figs. 22 to 26.

When the motor-operated valve control device 70, specifically the computer 80, receives an initialization command from the air conditioner control device 110 (S100), the motor-operated valve control device 70 invalidates the reference waveform of the voltage V stored in the non-volatile memory 75 and then starts performing the initialization operation. The initialization operation includes a second preparation operation (S200), a first preparation operation (S400), and a positioning operation (S600). The second preparation operation, the first preparation operation, and the positioning operation correspond to a second preparation step, a first preparation step, and a positioning step.

(Second preparation operation)

In the second preparation operation, the motor-operated valve control device 70 starts inputting the pulses P to the stepping motor 66 in descending order (S210 and Y in S220) to rotate the rotor 41 in the second direction. When the number of the pulses P input to the stepping motor 66 during the second preparation operation reaches a second preparation number N2 (N in S220), the motor-operated valve control device 70 stops inputting the pulses P to the stepping motor 66 (S230). The motor-operated valve control device 70 finishes the second preparation operation, and starts performing the first preparation operation.

(First preparation operation)

When the first preparation operation is started, the reference waveform of the voltage V is not yet set. "Not yet set" includes the following cases: the reference waveform of the voltage V has never been set; the reference waveform of the voltage V has been set but never been used and is to be overwritten by a new reference waveform of the voltage V; and the reference waveform of the voltage V has been set but is regarded as invalid.

In the first preparation operation, the motor-operated valve control device 70 starts inputting the pulses P to the stepping motor 66 in ascending order (S410 and Y in S420) to rotate the rotor 41 in the first direction. When the number of the pulses P input to the stepping motor 66 during the first preparation operation reaches K (N in S420), the motor-operated valve control device 70 obtains the waveform of the voltage V (S430) and sets a reference waveform of the voltage V (S440). The waveform of the voltage V is obtained starting from when the K-th pulse P is input during the first preparation operation. K is a natural number greater than or equal to one and less than or equal to the first preparation number N1. In the motor-operated valve control device 70, K = 1. Preferably, K is less than or equal to half of the first preparation number N1.

In Steps S430 and S440, the motor-operated valve control device 70 obtains the voltage V in response to pulse P[k] (where k = 1, 3, 5, or 7) being input, and stores the waveform of the voltage V in the non-volatile memory 75 as the reference waveform (i.e., the reference-waveform table C[k]) of the voltage V. In other words, the motor-operated valve control device 70 sets the reference waveform of the voltage V.

When the reference waveform of the voltage V is set, the motor-operated valve control device 70 starts performing a determination operation (S450 to S500).

The motor-operated valve control device 70 obtains the waveform of the voltage V (S450) and calculates the difference-degree score sv[k] (S460).

Specifically, the motor-operated valve control device 70 obtains the voltage V in response to pulse P[k] being input. The motor-operated valve control device 70 calculates the difference-degree score sv[k] using the waveform of the voltage V corresponding to pulse P[k] and the reference waveform (i.e., the reference-waveform table C[k]) of the voltage V corresponding to pulse P[k].

The motor-operated valve control device 70 determines at the ending point of pulse P[k] whether the waveform of the voltage V is similar to the reference waveform of the voltage V (S470).

Specifically, the motor-operated valve control device 70 compares the difference-degree score sv[k] with the similarity-degree score threshold G. When the difference-degree score sv[k] is less than or equal to the similarity-degree score threshold G, the motor-operated valve control device 70 determines that the waveform of the voltage V used for calculating the difference-degree score sv[k] is similar to the reference waveform of the voltage V. When the difference-degree score sv[k] is greater than the similarity-degree score threshold G, the motor-operated valve control device 70 determines that the waveform of the voltage V used for calculating the difference-degree score sv[k] is not similar to the reference waveform of the voltage V.

When the waveform of the voltage V is determined to be similar to the reference waveform of the voltage V (Y in S480), the motor-operated valve control device 70 stores the waveform of the voltage V in the non-volatile memory 75 as a new reference waveform of the voltage V (S490).

When the waveform of the voltage V is determined not to be similar to the reference waveform of the voltage V (N in S480), the motor-operated valve control device 70 maintains the present reference waveform of the voltage V. In other words, the motor-operated valve control device 70 does not update the reference waveform of the voltage V.

When the number of the pulses P input to the stepping motor 66 during the first preparation operation is less than the first preparation number N1 (Y in S500), the motor-operated valve control device 70 repeats the operation above (S450 to S500).

When the number of the pulses P input to the stepping motor 66 during the first preparation operation reaches the first preparation number N1 (N in S500), the motor-operated valve control device 70 finishes the first preparation operation and starts performing the positioning operation.

(Positioning operation)

In the positioning operation following the first preparation operation, the motor-operated valve control device 70 inputs the pulses P to the stepping motor 66 in ascending order to rotate the rotor 41 in the first direction.

The motor-operated valve control device 70 obtains the waveform of the voltage V (S610) and calculates the difference-degree score sv[k] (S620).

Specifically, the motor-operated valve control device 70 obtains the voltage V in response to pulse P[k] being input. The motor-operated valve control device 70 calculates the difference-degree score sv[k] using the waveform of the voltage V corresponding to pulse P[k] and the reference waveform (i.e., reference-waveform table C[k]) of the voltage V corresponding to pulse P[k].

The motor-operated valve control device 70 determines at the ending point of pulse P[k] whether the waveform of the voltage V is similar to the reference waveform of the voltage V (S622). The motor-operated valve control device 70 performs the same operation in Step S622 as the operation in Step S470.

When the waveform of the voltage V is determined to be similar to the reference waveform of the voltage V (Y in S624), the motor-operated valve control device 70 stores the waveform of the voltage V in the non-volatile memory 75 as a new reference waveform of the voltage V (S626). Then, the motor-operated valve control device 70 proceeds to Step S650.

When the waveform of the voltage V is determined not to be similar to the reference waveform of the voltage V (N in S624), the motor-operated valve control device 70 maintains the present reference waveform of the voltage V. Then, the motor-operated valve control device 70 proceeds to Step S630.

In Operation example 1, the reference-waveform setting operation (S622 to S626) in the positioning operation can be skipped. In this configuration, the motor-operated valve control device 70 proceeds from Step S620 to Step S630.

The motor-operated valve control device 70 determines the state of the motor-operated valve 5 (S630).

Specifically, the motor-operated valve control device 70 compares the difference-degree score $sv[k]$ with the difference-degree score threshold H, and compares the difference-degree score $sv[j]$ with the difference-degree score threshold H, where $sv[j]$ is calculated immediately before $sv[k]$: $j = k - 2$ when $k = 3, 5,$ or $7$; and $j = 7$ when $k = 1$. When the difference-degree score $sv[k]$ is greater than or equal to the difference-degree score threshold H and the difference-degree score $sv[j]$ is greater than or equal to the difference-degree score threshold H, the motor-operated valve control device 70 determines that the motor-operated valve 5 is in the first-rotation restricted state Sr1. When the motor-operated valve 5 is determined to be in the first-rotation restricted state Sr1, the motor-operated valve control device 70 stores number g in the non-volatile memory 75 as a starting pattern number Nx, where g is the number immediately preceding j: $g = j - 1$ when $j = 3,$ $5,$ or $7$; and $g = 8$ when $j = 1$. When the difference-degree score $sv[k]$ is less than the difference-degree score threshold H or the difference-degree score $sv[j]$ is less than the difference-degree score threshold H, the motor-operated valve control device 70 determines that the motor-operated valve 5 is in the first-rotation permitted state Sp1.

Alternatively, the motor-operated valve control device 70 may determine the state of the motor-operated valve 5 by comparing only the difference-degree score $sv[k]$ with the difference-degree score threshold H. Specifically, the motor-operated valve control device 70 compares the difference-degree score $sv[k]$ for time period $T[n]$ (where n is a natural number) with the difference-degree score threshold H, and compares the difference-degree score $sv[k]$ calculated in time period $T[n - 1]$ immediately preceding time period $T[n]$ with the difference-degree score threshold H. When the difference-degree score $sv[k]$ for time period $T[n]$ is greater than or equal to the difference-degree score threshold H and the difference-degree score $sv[k]$ for time period $T[n - 1]$ is greater than or equal to the difference-degree score threshold H, the motor-operated valve control device 70 determines that the motor-operated valve 5 is in the first-rotation restricted state Sr1. When difference-degree scores $sv[k]$ for three or more consecutive time periods T are all greater than or equal to the difference-degree score threshold H, the motor-operated valve control device 70 may determine that the motor-operated valve 5 is in the first-rotation restricted state Sr1. When the motor-operated valve 5 is determined to be in the first-rotation restricted state Sr1, the motor-operated valve control device 70 stores number g in the non-volatile memory 75 as the starting pattern number Nx, where g is the number immediately preceding k: $g = k - 1$ when $k = 3, 5,$ or $7$; and $g = 8$ when $k = 1$. When the difference-degree score $sv[k]$ for time period $T[n]$ is less than the difference-degree score threshold H or the difference-degree score $sv[k]$ for time period $T[n - 1]$ is less than the difference-degree score threshold H, the motor-operated valve control device 70 determines that the motor-operated valve 5 is in the first-rotation permitted state Sp1.

When the motor-operated valve 5 is in the first-rotation restricted state Sr1 (Y in S640), the motor-operated valve control device 70 determines that the rotor 41 is positioned at the reference position Rx. The motor-operated valve control device 70 notifies the success of the initialization operation to the air conditioner control device 110 (S660) and stops inputting the pulses P to the stepping motor 66 (S680). The motor-operated valve control device 70 finishes the positioning operation (i.e., the initialization operation).

When the motor-operated valve 5 is in the first-rotation permitted state Sp1 and the number of the pulses P input to the stepping motor 66 during the first preparation and positioning operations is less than or equal to the initialization number Ni (N in S640 and N in S650), the motor-operated valve control device 70 repeats the operation above (S610 to S650).

When the motor-operated valve 5 is in the first-rotation permitted state Sp1 and the number of the pulses P input to the stepping motor 66 during the first preparation and positioning operations exceeds the initialization number Ni (N in S640 and Y in S650), the motor-operated valve control device 70 determines that the motor-operated valve 5 has failed. The motor-operated valve control device 70 notifies the failure of the initialization operation to the air conditioner control device 110 (S670) and stops inputting the pulses P to the stepping motor 66 (S680). The motor-operated valve control device 70 finishes the positioning operation (i.e., the initialization operation).

When the initialization operation succeeds, the rotor 41 is positioned at the reference position Rx. The motor-operated valve control device 70 inputs the pulses P to the stepping motor 66 in descending order when rotating the rotor 41 in the second direction from the reference position Rx. At this time, the motor-operated valve control device 70 starts inputting the pulses P from the pulse P with the same pattern number as the starting pattern number Nx. For example, when the starting pattern number Nx is [6], the motor-operated valve control device 70 starts inputting the pulses P from pulse P [6] in descending order.

In Operation example 1, Steps S430, S450, and S610 correspond to the voltage obtaining step, Steps S440, S490, and S626 correspond to the reference-waveform setting step, and Step S630 corresponds to the state determining step.

Another example (Operation example 2) of the initialization operation of the motor-operated valve control device 70 is described below with reference to Figs. 27 to 30.

In Operation example 2, the reference waveform (i.e., the reference-waveform table C[k]) of the voltage V, a first reference waveform (i.e., a first reference-waveform table C1[k]) of the voltage V, and a second reference waveform (i.e., a second reference-waveform table C2[k]) of the voltage V are stored in the non-volatile memory 75. The first reference-waveform table C1[k] and the second reference-waveform table C2[k] have the same configuration as the reference-waveform table C[k].

When the motor-operated valve control device 70 receives the initialization command from the air conditioner control device 110 (S100), the motor-operated valve control device 70 invalidates the reference waveform, the first reference waveform, and the second reference waveform of the voltage V stored in the non-volatile memory 75 and then starts performing the initialization operation. The initialization operation includes the second preparation operation (S200), a first preparation operation (S700), and the positioning operation (S600). The second preparation and positioning operations of Operation example 2 are the same as those of Operation example 1, and detailed descriptions of these operations are omitted.

(First preparation operation)

When the first preparation operation is started, the reference waveform of the voltage V, the first reference waveform of the voltage V, and the second reference waveform of the voltage V are not yet set.

In the first preparation operation, the motor-operated valve control device 70 starts inputting the pulses P to the stepping motor 66 in ascending order (S710 and Y in S720) to rotate the rotor 41 in the first direction. When the number of the pulses P input to the stepping motor 66 during the first preparation operation reaches K (N in S720), the motor-operated valve control device 70 obtains the waveform of the voltage V (S730) and sets the first reference waveform of the voltage V (S740). The waveform of the voltage V is obtained starting from when the K-th pulse P is input during the first preparation operation.

In Step S740, the motor-operated valve control device 70 obtains the voltage V in response to pulse P[k] (where k = 1, 3, 5, or 7) being input, and stores the waveform of the voltage V in the non-volatile memory 75 as the first reference waveform (i.e., the first reference-waveform table C1[k]) of the voltage V. In other words, the motor-operated valve control device 70 sets the first reference waveform of the voltage V.

When the first reference waveform of the voltage V is set, the motor-operated valve control device 70 starts performing a first determination operation (S750 to S930).

The motor-operated valve control device 70 obtains the waveform of the voltage V (S750) and calculates a first difference-degree score sv1[k] (S760).

Specifically, the motor-operated valve control device 70 obtains the voltage V in response to pulse P[k] being input. The motor-operated valve control device 70 calculates the first difference-degree score sv1[k] using the waveform of the voltage V corresponding to pulse P[k] and the first reference waveform (i.e., the first reference-waveform table C1[k]) of the voltage V corresponding to pulse P[k]. The motor-operated valve control device 70 calculates the first difference-degree score sv1[k] in the same way as the difference-degree score sv[k].

The motor-operated valve control device 70 determines at the ending point of the pulse P[k] whether the waveform of the voltage V is similar to the first reference waveform of the voltage V (S770).

Specifically, the motor-operated valve control device 70 compares the first difference-degree score sv1[k] with the similarity-degree score threshold G. When the first difference-degree score sv1[k] is less than or equal to the similarity-degree score threshold G, the motor-operated valve control device 70 determines that the waveform of the voltage V used for calculating the first difference-degree score sv1[k] is similar to the first reference waveform of the voltage V. When the first difference-degree score sv1[k] is greater than the similarity-degree score threshold G, the motor-operated valve control device 70 determines that the waveform of the voltage V used for calculating the first difference-degree score sv1[k] is not similar to the first reference waveform of the voltage V.

When the waveform of the voltage V is determined to be similar to the first reference waveform of the voltage V (Y in S780), the motor-operated valve control device 70 stores the waveform of the voltage V in the non-volatile memory 75 as a new first reference waveform of the voltage V (S790).

When the waveform of the voltage V is determined for the first time not to be similar to the first reference waveform of the voltage V (N in S780), the motor-operated valve control device 70 stores the waveform of the voltage V in the non-volatile memory 75 as the second reference waveform (i.e., the second reference-waveform table C2[k]) of the voltage V (S820). In other words, the motor-operated valve control device 70 sets the second reference waveform of the voltage V.

When the number of the pulses P input to the stepping motor 66 during the first preparation operation is less than the first preparation number N1 (Y in S800), the motor-operated valve control device 70 repeats the operation above (S750 to S800).

When the number of the pulses P input to the stepping motor 66 during the first preparation operation reaches the first preparation number N1 (N in S800), the motor-operated valve control device 70 sets the first reference waveform of the voltage V as the reference waveform of the voltage V (S810). The motor-operated valve control device 70 finishes the first preparation operation and starts performing the positioning operation.

When the second reference waveform of the voltage V is set, the motor-operated valve control device 70 starts performing a second determination operation (S830 to S930).

The motor-operated valve control device 70 obtains the waveform of the voltage V (S830) and calculates the first difference-degree score sv1[k] and a second difference-degree score sv2[k] (S840).

Specifically, the motor-operated valve control device 70 obtains the voltage V in response to pulse P[k] being input. The motor-operated valve control device 70 calculates the first difference-degree score sv1[k] using the waveform of the voltage V corresponding to pulse P[k] and the first reference waveform (i.e., the first reference-waveform table C1[k]) of the voltage V corresponding to pulse P[k]. The motor-operated valve control device 70 calculates the second difference-degree score sv2[k] using the waveform of the voltage V corresponding to pulse P[k] and the second reference waveform (i.e., the second reference-waveform table C2[k]) of the voltage V corresponding to pulse P[k]. The motor-operated valve control device 70 calculates the first difference-degree score sv1[k] and the second difference-degree score sv2[k] in the same way as the difference-degree score sv[k].

The motor-operated valve control device 70 determines at the ending point of the pulse P[k] whether the waveform of the voltage V is similar to the first reference waveform of the voltage V and whether the waveform of the voltage V is similar to the second reference waveform of the voltage V (S850).

Specifically, the motor-operated valve control device 70 compares the first difference-degree score sv1[k] with the similarity-degree score threshold G. When the first difference-degree score sv1[k] is less than or equal to the similarity-degree score threshold G, the motor-operated valve control device 70 determines that the waveform of the voltage V used for calculating the first difference-degree score sv1[k] is similar to the first reference waveform of the voltage V. When the first difference-degree score sv1[k] is greater than the similarity-degree score threshold G, the motor-operated valve control device 70 determines that the waveform of the voltage V used for calculating the first difference-degree score sv1[k] is not similar to the first reference waveform of the voltage V.

The motor-operated valve control device 70 compares the second difference-degree score sv2[k] with the similarity-degree score threshold G. When the second difference-degree score sv2[k] is less than or equal to the similarity-degree score threshold G, the motor-operated valve control device 70 determines that the waveform of the voltage V used for calculating the second difference-degree score sv2[k] is similar to the second reference waveform of the voltage V. When the second difference-degree score sv2[k] is greater than the similarity-degree score threshold G, the motor-operated valve control device 70 determines that the waveform of the voltage V used for calculating the second difference-degree score sv2[k] is not similar to the second reference waveform of the voltage V.

When the waveform of the voltage V is determined to be similar to the first reference waveform of the voltage V and not to be similar to the second reference waveform of the voltage V (Y in S860 and N in S870), the motor-operated valve control device 70 stores the waveform of the voltage V in the non-volatile memory 75 as a new first reference waveform of the voltage V (S900).

When the waveform of the voltage V is determined not to be similar to the first reference waveform of the voltage V and to be similar to the second reference waveform of the voltage V (N in S860 and Y in S880), the motor-operated valve control device 70 stores the waveform of the voltage V in the non-volatile memory 75 as a new second reference waveform of the voltage V (S910).

When the waveform of the voltage V is determined not to be similar to the first reference waveform of the voltage V and not to be similar to the second reference waveform of the voltage V (N in S860 and N in S880), the motor-operated valve control device 70 maintains the present first reference waveform of the voltage V and the present second reference waveform of the voltage V.

When the waveform of the voltage V is determined to be similar to the first reference waveform of the voltage V and to be similar to the second reference waveform of the voltage V (Y in S860 and Y in S870), the motor-operated valve control device 70 determines which of the first and second reference waveforms the waveform of the voltage V is more similar to (S890).

Specifically, the motor-operated valve control device 70 compares the first difference-degree score sv1[k] with the second difference-degree score sv2[k]. When the first difference-degree score sv1[k] is less than or equal to the second difference-degree score sv2[k] (sv1[k] $\leq$ sv2[k]), the motor-operated valve control device 70 determines that the waveform of the voltage V is more similar to the first reference waveform of the voltage V than to the second reference waveform of the voltage V. When the first difference-degree score sv1[k] is greater than the second difference-degree score sv2[k] (sv1[k] > sv2[k]), the motor-operated valve control device 70 determines that the waveform of the voltage V is more similar to the second reference waveform of the voltage V than to the first reference waveform of the voltage V.

When the waveform of the voltage V is determined to be more similar to the first reference waveform of the voltage V than to the second reference waveform of the voltage V (Y in S890), the motor-operated valve control device 70 stores the waveform of the voltage V in the non-volatile memory 75 as a new first reference waveform of the voltage V (S900).

When the waveform of the voltage V is determined to be more similar to the second reference waveform of the voltage V than to the first reference waveform of the voltage V (N in S890), the motor-operated valve control device 70 stores the waveform of the voltage V in the non-volatile memory 75 as a new second reference waveform of the voltage V (S910).

When the waveform of the voltage V is determined to be similar to the first reference waveform of the voltage V and to be similar to the second reference waveform of the voltage V (Y in S860 and Y in S870), the motor-operated valve control device 70 may store the waveform of the voltage V in the non-volatile memory 75 as a new first reference waveform of the voltage V and as a new second reference waveform of the voltage V.

When the number of the pulses P input to the stepping motor 66 during the first preparation operation is less than the first preparation number N1 (Y in S920), the motor-operated valve control device 70 repeats the operation above (S830 to S920).

When the number of the pulses P input to the stepping motor 66 during the first preparation operation reaches the first preparation number N1 (N in S920), the motor-operated valve control device 70 sets, as the reference waveform of the voltage V, one of the first and second reference waveforms of the voltage V with the greater setting count (S930). In other words, when the setting count (referred to as a first setting count) of the waveform of the voltage V as the first reference waveform of the voltage V exceeds the setting count (referred to as a second setting count) of the waveform of the voltage V as the second reference waveform of the voltage V, the motor-operated valve control device 70 sets the first reference waveform of the voltage V as the reference waveform of the voltage V. When the second setting count exceeds the first setting count, the motor-operated valve control device 70 sets the second reference waveform of the voltage V as the reference waveform of the voltage V. When the first setting count is equal to the second setting count, the motor-operated valve control device 70 sets the first reference waveform of the voltage V as the reference waveform of the voltage V. The first setting count is the count of setting the waveform of the voltage V as the first reference waveform of the voltage V during Steps S740, S790, and S900. The second setting count is the count of setting the waveform of the voltage V as the second reference waveform of the voltage V during Steps S820 and S910. The motor-operated valve control device 70 finishes the first preparation operation and starts performing the positioning operation.

In Operation example 2, Steps S730, S750, and S830 correspond to the voltage obtaining step, Steps S740, S790, S810, S820, S900, S910, S930, and S626 correspond to the reference-waveform setting step, and Step S630 corresponds to the state determining step.

The motor-operated valve device 1 includes the motor-operated valve 5 and the motor-operated valve control device 70. The motor-operated valve 5 includes the valve body 10 that has the valve port 17, the stepping motor 66 that includes the rotor 41 and the stator 60, the valve member 30 that faces the valve port 17 and moves toward the valve port 17 when the rotor 41 rotates in the first direction, and the stopper mechanism 49 that restricts the rotation of the rotor 41 in the first direction when the rotor 41 is at the reference position Rx.

The motor-operated valve control device 70 (the rotation control unit 81) inputs the pulse P to the stepping motor 66 to rotate the rotor 41. The motor-operated valve control device 70 (the voltage obtaining unit 82) obtains the voltage V generated in the stator 60 by the rotation of the rotor 41 in the first direction. The motor-operated valve control device 70 (the state determining unit 83) determines, based on the degree of difference between the waveform of the voltage V and the reference waveform of the voltage V, whether the motor-operated valve 5 is in the first-rotation restricted state Sr1. The motor-operated valve control device 70 (the reference-waveform setting unit 84) sets the reference waveform of the voltage V. The motor-operated valve control device 70 performs the second preparation operation for inputting the second preparation number N2 of the pulses P to the stepping motor 66 to rotate the rotor 41 in the second direction. The motor-operated valve control device 70 performs the first preparation operation, following the second preparation operation, for inputting the first preparation number N1 of the pulses P to the stepping motor 66 to rotate the rotor 41 in the first direction. The first preparation number N1 is equal to the second preparation number N2. The motor-operated valve control device 70 sets the waveform of the voltage V obtained during the first preparation operation as the reference waveform of the voltage V.

With this configuration, when the motor-operated valve control device 70 determines that the motor-operated valve 5 capable of normal operation is in the first-rotation restricted state Sr1, the rotor 41 is at the reference position Rx. As a result, the motor-operated valve control device 70 stops the rotation of the rotor 41 in the first direction when determining that the motor-operated valve 5 is in the first-rotation restricted state Sr1, thereby enabling the duration of the initialization operation to be reduced. Additionally, a long-lasting noise after the rotor 41 is positioned at the reference position Rx can be suppressed.

The motor-operated valve control device 70 determines the state of the motor-operated valve 5 based on the degree of the difference between the waveform of the voltage V and the reference waveform of the voltage V. As a result, the state of the motor-operated valve 5 can be determined more accurately than with a configuration in which the state of the motor-operated valve 5 is determined based on the area or maximum amplitude of the waveform of the voltage V. The motor-operated valve control device 70 may determine the state of the motor-operated valve 5 based on the difference between the waveform of the voltage V and the reference waveform of the voltage V. For example, the motor-operated valve control device 70 may determine, based on the difference between the area of the waveform of the voltage V and the area of the reference waveform of the voltage V, or the difference between the amplitude of the waveform of the voltage V and the amplitude of the reference waveform of the voltage V, whether the motor-operated valve 5 is in the first-rotation restricted state Sr1.

The motor-operated valve control device 70 sets, as the reference waveform of the voltage V, the waveform of the voltage V obtained at a point after some time has elapsed since the start of an operation of the motor-operated valve 5. As a result, the waveform of the voltage V, which is obtained by actually using the motor-operated valve 5 and exhibits relatively consistent behavior, can be set as the reference waveform of the voltage V, thereby determining the state of the motor-operated valve 5 more accurately.

The motor-operated valve control device 70 determines whether the motor-operated valve 5 is in the first-rotation restricted state Sr1, based on the voltage V generated in the stator 60. Consequently, a component, such as a rotational angle sensor, for determining the state of the motor-operated valve 5 based on the rotation of the rotor 41 is not required in the motor-operated valve control device 70, resulting in a simple configuration for the motor-operated valve 5 and the motor-operated valve control device 70.

When the motor-operated valve 5 is determined to be in the first-rotation restricted state Sr1, the motor-operated valve control device 70 obtains the starting pattern number Nx based on the pattern number of the first-direction pulse corresponding to the waveform of the voltage V used for this determination. When the rotor 41 at the reference position Rx is rotated in the second direction, the motor-operated valve control device 70 starts inputting the pulses P in descending order from the pulse P with the same pattern number as the starting pattern number Nx. With this configuration, the motor-operated valve control device 70 can control the position of the rotor 41 more accurately.

When the motor-operated valve control device 70 starts performing the first preparation operation in Operation example 1, the reference waveform of the voltage V is not yet set. The motor-operated valve control device 70 performs the determination operation for determining, based on the degree of the difference between the waveform of the voltage V obtained during the first preparation operation and the reference waveform of the voltage V, whether the waveform of the voltage V is similar to the reference waveform of the voltage V. The motor-operated valve control device 70 starts performing the determination operation after the reference waveform of the voltage V is set. When the number of the pulses P input to the stepping motor 66 reaches K in the first preparation operation, the motor-operated valve control device 70 sets the waveform of the voltage V obtained by the motor-operated valve control device 70 as the reference waveform of the voltage V. When the motor-operated valve control device 70 determines in the determination operation that the waveform of the voltage V is similar to the reference waveform of the voltage V, the motor-operated valve control device 70 sets the waveform of the voltage V used for this determination as the reference waveform of the voltage V. When the motor-operated valve control device 70 determines in the determination operation that the waveform of the voltage V is not similar to the reference waveform of the voltage V, the motor-operated valve control device 70 maintains the reference waveform of the voltage V. With this configuration, the motor-operated valve control device 70 can set the reference waveform of the voltage V that is suitable for the motor-operated valve 5.

The motor-operated valve control device 70 performs the positioning operation, following the first preparation operation, for inputting the pulse P to the stepping motor 66 to rotate the rotor 41 in the first direction. In Operation example 1, the motor-operated valve control device 70 performs the determination operation during the first preparation operation and during the positioning operation. The waveform of the voltage V, which is obtained by actually using the motor-operated valve 5 and exhibits more consistent behavior, can be set as the reference waveform of the voltage V, thereby determining the state of the motor-operated valve 5 more accurately.

In the determination operation, the motor-operated valve control device 70 calculates the difference-degree score sv indicating the degree of the difference between the waveform of the voltage V and the reference waveform of the voltage V, and determines, based on the result of comparing the difference-degree score sv with the similarity-degree score threshold G, whether the waveform of the voltage V is similar to the reference waveform of the voltage V. With this configuration, the motor-operated valve control device 70 can set the reference waveform of the voltage V that is more suitable for the motor-operated valve 5.

The reference waveform of the voltage V is represented as the data table set for the first-direction pulse, and the data table includes the time point t and the reference voltage rv at the time point t that are associated with each other. The motor-operated valve control device 70 sequentially obtains the voltages V in response to the first-direction pulse input to the stepping motor 66. The motor-operated valve control device 70 calculates the intermediate value dv2 when the motor-operated valve control device 70 obtains the voltage v (i.e., the voltage V) at the obtaining time tv in response to the first-direction pulse being input. The intermediate value dv2 is a squared value of the difference value dv between the voltage v obtained at the obtaining time tv and the reference voltage rv associated with the time point t corresponding to the obtaining time tv in the data table set for the first-direction pulse input to the stepping motor 66. The motor-operated valve control device 70 calculates the difference-degree score sv by summing the intermediate values dv2 calculated by using the voltage v obtained in response to the first-direction pulse being input. The difference-degree score sv is calculated using Expression (1) above. With this configuration, the difference-degree score sv more appropriately reflects the degree of difference in the shapes of the waveforms than the area and maximum amplitude of the waveform. As a result, the motor-operated valve control device 70 can determine the state of the motor-operated valve 5 more accurately.

The difference-degree score sv is not limited to being obtained by the calculation using Expression (1) above. For example, the difference-degree score may relate to the transition in magnitude of the voltage v at respective obtaining times tv. Specifically, when the voltage v is obtained at the obtaining time tv in response to the first-direction pulse being input, the motor-operated valve control device 70 calculates the difference value dv between the voltage v and the reference voltage rv associated with the time point t corresponding to the obtaining time tv in the data table set for the pulse P input to the stepping motor 66. The difference value dv is calculated as an absolute value. The motor-operated valve control device 70 calculates the difference values dv using the voltages v obtained in response to the pulse P being input and uses the number of the difference values dv which are greater than or equal to a predetermined difference threshold as the difference-degree score. This difference-degree score also appropriately reflects the degree of the difference in the shapes of the waveforms. Alternatively, the difference-degree score may be a score concerning transition in the slope of the voltage v at respective obtaining times tv. Preferably, the difference-degree score is a score that reflects time-series elements.

The motor-operated valve control device 70 calculates the difference-degree score sv by summing the intermediate values dv2 calculated using the voltages v obtained during the second part p2, which is a part of the time period from the starting point to the ending point of the first-direction pulse. The voltage v obtained in the second part p2 includes a first voltage component due to back electromotive force generated by inductance of the stator 60 and a second voltage component due to electromagnetic induction generated by the rotation of the rotor 41, and the magnitude of the first voltage component is less than the magnitude of the second voltage component. With this configuration, the proportion of the second voltage component in the voltage v is relatively high, resulting in a more accurate determination of the state of the motor-operated valve 5 by the motor-operated valve control device 70.

When the motor-operated valve control device 70 starts performing the first preparation operation in Operation example 2, the first reference waveform of the voltage V and the second reference waveform of the voltage V are not yet set. The motor-operated valve control device 70 performs the first determination operation for determining, based on the degree of the difference between the waveform of the voltage V obtained during the first preparation operation and the first reference waveform of the voltage V, whether the waveform of the voltage V is similar to the first reference waveform of the voltage V. The motor-operated valve control device 70 performs the second determination operation for determining, based on the degree of the difference between the waveform of the voltage V obtained during the first preparation operation and the second reference waveform of the voltage V, whether the waveform of the voltage V is similar to the second reference waveform of the voltage V. The motor-operated valve control device 70 starts performing the first determination operation after the first reference waveform of the voltage V is set. The motor-operated valve control device 70 starts performing the second determination operation after the second reference waveform of the voltage V is set. When the number of the pulses P input to the stepping motor 66 reaches K in the first preparation operation, the motor-operated valve control device 70 sets the waveform of the voltage V obtained by the motor-operated valve control device 70 as the first reference waveform of the voltage V. When the motor-operated valve control device 70 determines in the first determination operation that the waveform of the voltage V is similar to the first reference waveform of the voltage V, the motor-operated valve control device 70 sets the waveform of the voltage V used for this determination as the first reference waveform of the voltage V. When the motor-operated valve control device 70 determines in the first determination operation that the waveform of the voltage V is not similar to the first reference waveform of the voltage V, the motor-operated valve control device 70 maintains the first reference waveform of the voltage V. When the motor-operated valve control device 70 determines for the first time in the first determination operation that the waveform of the voltage V is not similar to the first reference waveform of the voltage V, the motor-operated valve control device 70 sets the waveform of the voltage V used for this determination as the second reference waveform of the voltage V. When the motor-operated valve control device 70 determines in the second determination operation that the waveform of the voltage V is similar to the second reference waveform of the voltage V, the motor-operated valve control device 70 sets the waveform of the voltage V used for this determination as the second reference waveform of the voltage V. When the motor-operated valve control device 70 determines in the second determination operation that the waveform of the voltage V is not similar to the second reference waveform of the voltage V, the motor-operated valve control device 70 maintains the second reference waveform of the voltage V. When the first preparation operation is finished and the first setting count is greater than the second setting count, the motor-operated valve control device 70 sets the first reference waveform of the voltage V as the reference waveform of the voltage V. When the first preparation operation is finished and the second setting count is greater than the first setting count, the motor-operated valve control device 70 sets the second reference waveform of the voltage V as the reference waveform of the voltage V. The first setting count is the count of setting the waveform of the voltage V as the first reference waveform of the voltage V. The second setting count is the count of setting the waveform of the voltage V as the second reference waveform of the voltage V. With this configuration, the motor-operated valve control device 70 can set the reference waveform of the voltage V that is suitable for the motor-operated valve 5. When the first setting count is equal to the second setting count, the motor-operated valve control device 70 sets the first reference waveform of the voltage V as the reference waveform of the voltage V. Alternatively, when the first setting count is equal to the second setting count, the motor-operated valve control device 70 may set the second reference waveform of the voltage V as the reference waveform of the voltage V.

The motor-operated valve control device 70 performs the determination operation for determining, based on the degree of the difference between the waveform of the voltage V obtained during the positioning operation in Operation example 2 and the reference waveform of the voltage V, whether the waveform of the voltage V is similar to the reference waveform of the voltage V. The motor-operated valve control device 70 starts performing the determination operation when the positioning operation is started. When the motor-operated valve control device 70 determines in the determination operation that the waveform of the voltage V is similar to the reference waveform of the voltage V, the motor-operated valve control device 70 sets the waveform of the voltage V used for this determination as the reference waveform of the voltage V. When the motor-operated valve control device 70 determines in the determination operation that the waveform of the voltage V is not similar to the reference waveform of the voltage V, the motor-operated valve control device 70 maintains the reference waveform of the voltage V. With this configuration, the waveform of the voltage V, which is obtained by actually using the motor-operated valve 5 and exhibits more consistent behavior, can be set as the reference waveform of the voltage V, thereby determining the state of the motor-operated valve 5 more accurately.

When the motor-operated valve control device 70 determines in the first determination operation that the waveform of the voltage V is similar to the first reference waveform of the voltage V and determines in the second determination operation that the waveform of the voltage V is similar to the second reference waveform of the voltage V,

(1) when the waveform of the voltage V used for these determinations is more similar to the first reference waveform of the voltage V than to the second reference waveform of the voltage V, the motor-operated valve control device 70 sets the waveform of the voltage V used for these determinations as the first reference waveform of the voltage V, and
(2) when the waveform of the voltage V used for these determinations is more similar to the second reference waveform of the voltage V than to the first reference waveform of the voltage V, the motor-operated valve control device 70 sets the waveform of the voltage V used for these determinations as the second reference waveform of the voltage V. With this configuration, a single waveform of the voltage V can be prevented from being set as the first reference waveform of the voltage V and as the second reference waveform of the voltage V.

In the first determination operation, the motor-operated valve control device 70 calculates the first difference-degree score sv1 indicating the degree of the difference between the waveform of the voltage V and the first reference waveform of the voltage V, and determines, based on the result of comparing the first difference-degree score sv1 with the similarity-degree score threshold G, whether the waveform of the voltage V is similar to the first reference waveform of the voltage V. In the second determination operation, the motor-operated valve control device 70 calculates the second difference-degree score sv2 indicating the degree of the difference between the waveform of the voltage V and the second reference waveform of the voltage V, and determines, based on the result of comparing the second difference-degree score sv2 with the similarity-degree score threshold G, whether the waveform of the voltage V is similar to the second reference waveform of the voltage V. With this configuration, the motor-operated valve control device 70 can set the first reference waveform of the voltage V, the second reference waveform of the voltage V, and the reference waveform of the voltage V that are more suitable for the motor-operated valve 5.

The motor-operated valve control device 70 may perform the second and first preparation operations multiple times, and set the waveform of the voltage V obtained during the first preparation operation performed most recently as the reference waveform of the voltage V. With this configuration, the motor-operated valve 5 can be sufficiently warmed up, and a waveform of the voltage V exhibiting more consistent behavior can be set as the reference waveform of the voltage V.

The motor-operated valve control device 70 performs the positioning operation, following the first preparation operation, for inputting the pulse P to the stepping motor 66 to rotate the rotor 41 in the first direction. The motor-operated valve control device 70 stops inputting the pulse P to the stepping motor 66 when the motor-operated valve control device 70 determines in the positioning operation that the motor-operated valve 5 is in the first-rotation restricted state Sr1. The motor-operated valve control device 70 determines that the motor-operated valve 5 has failed when the number of the pulses P input to the stepping motor 66 in the first preparation and positioning operations exceeds the initialization number Ni. With this configuration, the motor-operated valve control device 70 can stop the rotation of the rotor 41 in the first direction in a simple and quick manner compared with a configuration in which, for example, the air conditioner control device 110 is notified of the motor-operated valve 5 being in the first-rotation restricted state Sr1, a stopping command from the air conditioner control device 110 is received, and subsequently the initialization operation is stopped. Additionally, the motor-operated valve control device 70 can detect that the motor-operated valve 5 has failed.

The stator 60 includes the A-phase stator 61 and the B-phase stator 62. The motor-operated valve control device 70 obtains the voltage VB generated in the B-phase stator 62 when the motor-operated valve control device 70 supplies the driving current only to the A-phase stator 61 and obtains the voltage VA generated in the A-phase stator 61 when the motor-operated valve control device 70 supplies the driving current only to the B-phase stator 62. With this configuration, it is not required in the motor-operated valve control device 70 to separate the voltage component due to electromagnetic induction from the voltage generated in the A-phase stator 61 and separate the voltage component due to electromagnetic induction from the voltage generated in the B-phase stator 62. As a result, the voltages VA and VB can be obtained by means of a relatively simple configuration.

Voltage and current have a close relationship. Consequently, the motor-operated valve control device 70 may perform Operation examples 1 and 2 using, instead of the voltage generated in the stator 60 by the rotation of the rotor 41, the current generated in the stator 60 by the rotation of the rotor 41. The configuration using the waveform of the current has the same functions and effects as those of the configuration using the waveform of the voltage.

In this specification, the terms indicating shapes, such as "circular cylindrical" and "circular columnar", are also used for members and portions of the members substantially having the shapes indicated by the terms. For example, "circular cylindrical member" includes a circular cylindrical member and a substantially circular cylindrical member. Additionally, in this specification, the term "the same" may include strictly the same and substantially the same.

The embodiments of the present invention are described above. The present invention, however, is not limited to these embodiments. Embodiments obtained by a person skilled in the art appropriately adding, removing, or modifying components according to the embodiments described above, and an embodiment obtained by appropriately combining features of the embodiments are included in the scope of the present invention without departing from the spirit of the present invention.

Reference Signs List

1 ... motor-operated valve device, 5 ... motor-operated valve, 10 ... valve body, 11 ... body member, 11a ... fitting hole, 11b ... through hole, 11d ... planar part,
13 ... connection member, 14 ... valve chamber, 15 ... first conduit, 16 ... second conduit, 17 ... valve port, 18 ... valve seat, 20 ... can, 30 ... valve member, 31 ... first stem portion, 32 ... second stem portion, 33 ... plug portion, 34 ... step portion, 40 ... driving mechanism,
41 ... rotor, 41a ... fitting hole, 42 ... valve stem holder, 42a ... upper wall portion, 42b ... stem hole,
42c ... internal thread, 42s ... movable stopper, 43 ... guide bush, 43a ... base portion, 43b ... support portion, 43c ... external thread, 43d ... planar part, 44 ... stopper member, 44a ... stopper body, 44c ... internal thread,
44s ... fixed stopper, 45 ... fixed member, 45a ... fixed portion, 45b ... flange portion, 46 ... washer, 47 ... valve closing spring, 48 ... return spring, 49 ... stopper mechanism, 60 ... stator, 61 ... A-phase stator, 61a ... pole tooth, 61b ... pole tooth, 61c ... coil, 62 ... B-phase stator, 62a ... pole tooth, 62b ... pole tooth, 62c ... coil, 66 ... stepping motor, 70 ... motor-operated valve control device, 71 ... circuit board, 75 ... non-volatile memory, 76 ... communication device, 77 ... motor driver,
80 ... computer, 81 ... rotation control unit, 82 ... voltage obtaining unit, 83 ... state determining unit,
84 ... reference-waveform setting unit, 100 ... air conditioner, 101 ... compressor, 102 ... condenser, 103 ... evaporator, 105 ... pipe, 110 ... air conditioner control device, 120 ... wired communication bus, A1 ... terminal,
A2 ... terminal, B1 ... terminal, B2 ... terminal, L ... axis, T ... time period, t1 ... time point, t2 ... time point, p1 ... first part, p2 ... second part, C ... reference-waveform table, C1 ... first reference-waveform table, C2 ... second reference-waveform table, G ... similarity-degree score threshold, H ... difference-degree score threshold, Ni ... initialization number, Ns ... stroke number, N2 ... second preparation number, N1 ... first preparation number, Nx ... starting pattern number, P ... pulse, Rc ... valve closing position, Ro ... valve opening position, Rx ... reference position, Rz ... full-open position, Sp1 ... first-rotation permitted state, Sr1 ... first-rotation restricted state, sv ... difference-degree score, sv1 ... first difference-degree score, sv2 ... second difference-degree score, V ... voltage, VA ... voltage,
VB ... voltage.

**Claims**

1. A motor-operated valve control device for controlling a motor-operated valve including a valve body that has a valve port, a stepping motor that includes a rotor and a stator, a valve member that faces the valve port and moves toward the valve port when the rotor rotates in a first direction, and a stopper mechanism that restricts rotation of the rotor in the first direction when the rotor is at a reference position,
the motor-operated valve control device comprising:

a rotation control unit configured to input a pulse to the stepping motor to rotate the rotor;
a voltage obtaining unit configured to obtain a voltage generated in the stator by the rotation of the rotor in the first direction;
a state determining unit configured to determine, based on a difference between a waveform of the voltage and a reference waveform of the voltage, whether the motor-operated valve is in a first-rotation restricted state where the rotation of the rotor in the first direction is restricted; and
a reference-waveform setting unit configured to set the reference waveform of the voltage,
wherein the rotation control unit is configured to perform a second preparation operation for inputting a second preparation number of pulses to the stepping motor to rotate the rotor in a second direction and perform a first preparation operation, following the second preparation operation, for inputting a first preparation number of pulses to the stepping motor to rotate the rotor in the first direction, the first preparation number being less than or equal to the second preparation number, and
wherein the reference-waveform setting unit is configured to set the waveform of the voltage obtained by the voltage obtaining unit during the first preparation operation as the reference waveform of the voltage.

2. The motor-operated valve control device according to Claim 1,

wherein when the rotation control unit starts performing the first preparation operation, the reference waveform of the voltage is not yet set,
wherein the state determining unit is configured to start performing a determination operation after the reference waveform of the voltage is set by the reference-waveform setting unit, the determination operation being performed for determining whether the waveform of the voltage obtained by the voltage obtaining unit during the first preparation operation is similar to the reference waveform of the voltage, and
wherein the reference-waveform setting unit is configured to:

when the number of pulses input to the stepping motor reaches K in the first preparation operation, set the waveform of the voltage obtained by the voltage obtaining unit as the reference waveform of the voltage, K being a natural number greater than or equal to one,
when the state determining unit determines in the determination operation that the waveform of the voltage is similar to the reference waveform of the voltage, set the waveform of the voltage used in the determination operation as the reference waveform of the voltage, and
when the state determining unit determines in the determination operation that the waveform of the voltage is not similar to the reference waveform of the voltage, maintain the reference waveform of the voltage.

3. The motor-operated valve control device according to Claim 2,

wherein the rotation control unit is configured to perform a positioning operation, following the first preparation operation, for inputting a pulse to the stepping motor to rotate the rotor in the first direction, and
wherein the state determining unit is configured to perform the determination operation for determining whether the waveform of the voltage obtained by the voltage obtaining unit during the first preparation operation and during the positioning operation is similar to the reference waveform of the voltage.

4. The motor-operated valve control device according to Claim 2 or 3, wherein the state determining unit is configured to, in the determination operation, calculate a difference-degree score indicating a degree of the difference between the waveform of the voltage and the reference waveform of the voltage, and determine, based on a result of comparing the difference-degree score with a similarity-degree score threshold, whether the waveform of the voltage is similar to the reference waveform of the voltage.

5. The motor-operated valve control device according to Claim 4,

wherein the reference waveform of the voltage is represented as a data table set for a first-direction pulse, the data table including a time point and a reference voltage at the time point that are associated with each other, the first-direction pulse being a pulse input to the stepping motor to rotate the rotor in the first direction,
wherein the voltage obtaining unit is configured to sequentially obtain voltages each of which is the voltage obtained in response to the first-direction pulse input to the stepping motor,

wherein the state determining unit is configured to calculate an intermediate value when the voltage obtaining unit obtains the voltage at an obtaining time in response to the first-direction pulse being input, the intermediate value being a squared value of a difference value between the voltage obtained at the obtaining time and the reference voltage associated with the time point corresponding to the obtaining time in the data table set for the first-direction pulse input to the stepping motor, and

wherein the state determining unit is configured to calculate the difference-degree score by summing intermediate values each of which is the intermediate value calculated by using the voltage obtained by the voltage obtaining unit in response to the first-direction pulse being input.

6. The motor-operated valve control device according to Claim 5,

wherein the state determining unit is configured to calculate the difference-degree score by summing intermediate values each of which is the intermediate value calculated by using the voltage obtained by the voltage obtaining unit in a part of a time period from a starting point to an ending point of the first-direction pulse, and

wherein the voltage obtained in the part of the time period includes a first voltage component due to back electromotive force generated by inductance of the stator and a second voltage component due to electromagnetic induction generated by the rotation of the rotor, the first voltage component being less than the second voltage component in magnitude.

7. The motor-operated valve control device according to Claim 1,

wherein when the rotation control unit starts performing the first preparation operation, a first reference waveform of the voltage and a second reference waveform of the voltage are not yet set,

wherein the state determining unit is configured to:

start performing a first determination operation after the first reference waveform of the voltage is set by the reference-waveform setting unit, the first determination operation being performed for determining whether the waveform of the voltage obtained by the voltage obtaining unit during the first preparation operation is similar to the first reference waveform of the voltage, and

start performing a second determination operation after the second reference waveform of the voltage is set by the reference-waveform setting unit, the second determination operation being performed for determining whether the waveform of the voltage obtained by the voltage obtaining unit during the first preparation operation is similar to the second reference waveform of the voltage, and

wherein the reference-waveform setting unit is configured to:

when the number of pulses input to the stepping motor reaches K in the first preparation operation, set the waveform of the voltage obtained by the voltage obtaining unit as the first reference waveform of the voltage, K being a natural number greater than or equal to one,

when the state determining unit determines in the first determination operation that the waveform of the voltage is similar to the first reference waveform of the voltage, set the waveform of the voltage used in the first determination operation as the first reference waveform of the voltage,

when the state determining unit determines in the first determination operation that the waveform of the voltage is not similar to the first reference waveform of the voltage, maintain the first reference waveform of the voltage,

when the state determining unit determines for the first time in the first determination operation that the waveform of the voltage is not similar to the first reference waveform of the voltage, set the waveform of the voltage used in the first determination operation as the second reference waveform of the voltage,

when the state determining unit determines in the second determination operation that the waveform of the voltage is similar to the second reference waveform of the voltage, set the waveform of the voltage used in the second determination operation as the second reference waveform of the voltage,

when the state determining unit determines in the second determination operation that the waveform of the voltage is not similar to the second reference waveform of the voltage, maintain the second reference waveform of the voltage,

when the first preparation operation is finished and a count of setting the waveform of the voltage as the first reference waveform of the voltage is greater than a count of setting the waveform of the voltage as the second reference waveform of the voltage, set the first reference waveform of the voltage as the reference waveform of the voltage, and

when the first preparation operation is finished and the count of setting the waveform of the voltage as the second reference waveform of the voltage is greater than the count of setting the waveform of the voltage as the first reference waveform of the voltage, set the second reference waveform of the voltage as the reference waveform of the voltage.

8. The motor-operated valve control device according to Claim 7,

wherein the rotation control unit is configured to perform a positioning operation, following the first preparation operation, for inputting a pulse to the stepping motor to rotate the rotor in the first direction,
wherein the state determining unit is configured to start performing a determination operation when the positioning operation is started, the determination operation being performed for determining whether the waveform of the voltage obtained by the voltage obtaining unit during the positioning operation is similar to the reference waveform of the voltage, and
wherein the reference-waveform setting unit is configured to:

when the state determining unit determines in the determination operation that the waveform of the voltage is similar to the reference waveform of the voltage, set the waveform of the voltage used in the determination operation as the reference waveform of the voltage, and
when the state determining unit determines in the determination operation that the waveform of the voltage is not similar to the reference waveform of the voltage, maintain the reference waveform of the voltage.

9. The motor-operated valve control device according to Claim 7,

wherein the reference-waveform setting unit is configured to,
when the state determining unit determines in the first determination operation that the waveform of the voltage is similar to the first reference waveform of the voltage and determines in the second determination operation that the waveform of the voltage is similar to the second reference waveform of the voltage,

(1) when the waveform of the voltage used in the first and second determination operations is more similar to the first reference waveform of the voltage than to the second reference waveform of the voltage, set the waveform of the voltage used for these determinations as the first reference waveform of the voltage, and
(2) when the waveform of the voltage used in the first and second determination operations is more similar to the second reference waveform of the voltage than to the first reference waveform of the voltage, set the waveform of the voltage used for these determinations as the second reference waveform of the voltage.

10. The motor-operated valve control device according to Claim 7,
wherein the state determining unit is configured to:

in the first determination operation, calculate a first difference-degree score indicating a degree of difference between the waveform of the voltage and the first reference waveform of the voltage, and determine, based on a result of comparing the first difference-degree score with a similarity-degree score threshold, whether the waveform of the voltage is similar to the first reference waveform of the voltage, and
in the second determination operation, calculate a second difference-degree score indicating a degree of difference between the waveform of the voltage and the second reference waveform of the voltage, and determine, based on a result of comparing the second difference-degree score with the similarity-degree score threshold, whether the waveform of the voltage is similar to the second reference waveform of the voltage.

11. The motor-operated valve control device according to Claim 1,

wherein the rotation control unit is configured to perform the second and first preparation operations multiple times, and
wherein the reference-waveform setting unit is configured to set the waveform of the voltage obtained by the voltage obtaining unit during the first preparation operation performed most recently as the reference waveform of the voltage.

12. The motor-operated valve control device according to Claim 1,

wherein the rotation control unit is configured to perform a positioning operation, following the first preparation operation, for inputting a pulse to the stepping motor to rotate the rotor in the first direction,

wherein the rotation control unit is configured to stop inputting the pulse to the stepping motor when the state determining unit determines in the positioning operation that the motor-operated valve is in the first-rotation restricted state, and

wherein the state determining unit is configured to determine that the motor-operated valve has failed when the number of pulses input to the stepping motor in the first preparation and positioning operations exceeds an initialization number that is a sufficient number to position the rotor at the reference position.

13. The motor-operated valve control device according to Claim 1,

wherein the stator includes an A-phase stator and a B-phase stator, and

wherein the voltage obtaining unit is configured to obtain the voltage generated in one of the A-phase and B-phase stators when the rotation control unit supplies a driving current only to the other of the A-phase and B-phase stators in response to a pulse input to the stepping motor.

14. A motor-operated valve control device for controlling a motor-operated valve including a valve body that has a valve port, a stepping motor that includes a rotor and a stator, a valve member that faces the valve port and moves toward the valve port when the rotor rotates in a first direction, and a stopper mechanism that restricts rotation of the rotor in the first direction when the rotor is at a reference position,

the motor-operated valve control device comprising:

a rotation control unit configured to input a pulse to the stepping motor to rotate the rotor;

a current obtaining unit configured to obtain a current generated in the stator by the rotation of the rotor in the first direction;

a state determining unit configured to determine, based on a difference between a waveform of the current and a reference waveform of the current, whether the motor-operated valve is in a first-rotation restricted state where the rotation of the rotor in the first direction is restricted; and

a reference-waveform setting unit configured to set the reference waveform of the current,

wherein the rotation control unit is configured to perform a second preparation operation for inputting a second preparation number of pulses to the stepping motor to rotate the rotor in a second direction and perform a first preparation operation, following the second preparation operation, for inputting a first preparation number of pulses to the stepping motor to rotate the rotor in the first direction, the first preparation number being less than or equal to the second preparation number, and

wherein the reference-waveform setting unit is configured to set the waveform of the current obtained by the current obtaining unit during the first preparation operation as the reference waveform of the current.

15. A motor-operated valve device comprising: the motor-operated valve; and the motor-operated valve control device according to Claim 1 or 14.

16. A method for controlling a motor-operated valve including a valve body that has a valve port, a stepping motor that includes a rotor and a stator, a valve member that faces the valve port and moves toward the valve port when the rotor rotates in a first direction, and a stopper mechanism that restricts rotation of the rotor in the first direction when the rotor is at a reference position,

the method comprising:

a second preparation step for inputting a second preparation number of pulses to the stepping motor to rotate the rotor in a second direction;

a first preparation step, following the second preparation step, for inputting a first preparation number of pulses to the stepping motor to rotate the rotor in the first direction, the first preparation number being less than or equal to the second preparation number;

a positioning step, following the first preparation step, for inputting a pulse to the stepping motor to rotate the rotor in the first direction;

a voltage obtaining step for obtaining a voltage generated in the stator by the rotation of the rotor in the first direction;

a reference-waveform setting step for setting a waveform of the voltage obtained during the first preparation step as a reference waveform of the voltage; and

a state determining step for determining, based on a difference between the waveform of the voltage obtained during the positioning step and the reference waveform of the voltage, whether the motor-operated valve is in a first-rotation restricted state where the rotation of the rotor in the first direction is restricted.

17. A method for controlling a motor-operated valve including a valve body that has a valve port, a stepping motor that includes a rotor and a stator, a valve member that faces the valve port and moves toward the valve port when the rotor rotates in a first direction, and a stopper mechanism that restricts rotation of the rotor in the first direction when the rotor is at a reference position,
the method comprising:

a second preparation step for inputting a second preparation number of pulses to the stepping motor to rotate the rotor in a second direction;
a first preparation step, following the second preparation step, for inputting a first preparation number of pulses to the stepping motor to rotate the rotor in the first direction, the first preparation number being less than or equal to the second preparation number;
a positioning step, following the first preparation step, for inputting a pulse to the stepping motor to rotate the rotor in the first direction;
a current obtaining step for obtaining a current generated in the stator by the rotation of the rotor in the first direction;
a reference-waveform setting step for setting a waveform of the current obtained during the first preparation step as a reference waveform of the current; and
a state determining step for determining, based on a difference between the waveform of the current obtained during the positioning step and the reference waveform of the current, whether the motor-operated valve is in a first-rotation restricted state where the rotation of the rotor in the first direction is restricted.

# FIG.1

# FIG.2

# FIG.3

（A）

（B）

# FIG.4

# FIG.5

（A）

（B）

FIG.6

# FIG.7

（A）

| | P[1] | P[2] | P[3] | P[4] | P[5] | P[6] | P[7] | P[8] | NOTE |
|---|---|---|---|---|---|---|---|---|---|
| A-PHASE STATOR | + | + | O | − | − | − | O | + | + : A 1→A 2<br>0 : O F F<br>− : A 2→A 1 |
| B-PHASE STATOR | O | + | + | + | O | − | − | − | + : B 1→B 2<br>0 : O F F<br>− : B 2→B 1 |

（B）

# FIG.8

# FIG.9

# FIG.10

# FIG.11

# FIG.12

# FIG.13

# FIG.14

60  61  62      61a  62a  61b  62b

41                                          66 { 41
                                               60

42s                                         44s

66

L

42

61a  61b

P[7]                                    61

A-PHASE STATOR  $\begin{matrix}+\\0\\-\end{matrix}$    41

ROTOR    | S | N | S | N | S | N | S |      62

B-PHASE STATOR  $\begin{matrix}+\\0\\-\end{matrix}$    62

62a  62b

# FIG.15

# FIG.16

FIG.17

FIG.18

FIG.19

# FIG.20

| # | TIME POINT t | VOLTAGE rv |
|---|---|---|
| 0 | 0 | 0.0 |
| 1 | 200 | 338.5 |
| 2 | 400 | 468.5 |
| 3 | 600 | 440.3 |
| 4 | 800 | 133.8 |
| 5 | 1000 | 65.8 |
| 6 | 1200 | 41.2 |
| 7 | 1400 | 30.4 |
| 8 | 1600 | 24.9 |
| 9 | 1800 | 23.7 |
| : | : | : |
| 34 | 6800 | 20.0 |
| 35 | 7000 | 15.8 |
| 36 | 7200 | 11.5 |
| 37 | 7400 | 7.8 |
| 38 | 7600 | 0.0 |
| 39 | 7800 | 0.0 |

# FIG.21

# FIG.22

```
        ( S T A R T )
              |
              v
  ┌─────────────────────────┐
  │ RECEIVE INITIALIZATION   │─── S100
  │ COMMAND                  │
  └─────────────────────────┘
              |
              v
  ┌─────────────────────────┐
  │ SECOND PREPARATION       │─── S200
  │ OPERATION                │
  └─────────────────────────┘
              |
              v
  ┌─────────────────────────┐
  │ FIRST PREPARATION        │─── S400
  │ OPERATION                │
  └─────────────────────────┘
              |
              v
  ┌─────────────────────────┐
  │ POSITIONING              │─── S600
  │ OPERATION                │
  └─────────────────────────┘
              |
              v
        ( E N D )
```

# FIG.23

```
      ┌─────────────────────────┐
      │ SECOND PREPARATION      │
      │ OPERATION               │
      └─────────────────────────┘
                  │
                  ▼
    ┌─────────────────────────────┐
    │ START INPUTTING PULSES P    │──── S210
    │ IN DESCENDING ORDER         │
    └─────────────────────────────┘
                  │
       ┌──────────┤
       │          ▼
       │      ╱─────────────────────────╲
       │     ╱  IS NUMBER OF INPUT PULSES P ╲──── S220
      Y│    ╱  LESS THAN SECOND PREPARATION  ╲
       └───╱         NUMBER N2?               ╲
           ╲                                  ╱
            ╲                                ╱
             ╲──────────────────────────────╱
                         │ N
                         ▼
      ┌─────────────────────────────┐
      │ STOP INPUTTING PULSES P     │──── S230
      └─────────────────────────────┘
                  │
                  ▼
      ┌─────────────────────────┐
      │      R E T U R N        │
      └─────────────────────────┘
```

# FIG.24

```
        ┌─────────────────────┐
        │  FIRST PREPARATION  │
        │     OPERATION       │
        └─────────────────────┘
                  │
                  ▼
        ┌─────────────────────┐
        │ START INPUTTING PULSES P │  ─── S410
        │   IN ASCENDING ORDER     │
        └─────────────────────┘
                  │
        ┌─────────┤
        │         ▼
        │       ◇────────────────────◇  ─── S420
        │ Y  ◇  IS NUMBER OF INPUT PULSES P  ◇
        └───◇      LESS THAN K?            ◇
            ◇────────────────────◇
                  │ N
                  ▼
        ┌─────────────────────┐
        │ OBTAIN WAVEFORM OF VOLTAGE │  ─── S430
        └─────────────────────┘
                  │
                  ▼
        ┌─────────────────────┐
        │  SET REFERENCE WAVEFORM │  ─── S440
        └─────────────────────┘
                  │
                  ▼
                ( 1 )
```

# FIG.25

① 1

OBTAIN WAVEFORM OF VOLTAGE — S450

CALCULATE
DIFFERENCE-DEGREE SCORE — S460

DETERMINE WHETHER WAVEFORM IS
SIMILAR TO REFERENCE WAVEFORM — S470

IS WAVEFORM SIMILAR TO
REFERENCE WAVEFORM? — S480

N

Y

SET REFERENCE WAVEFORM — S490

IS NUMBER OF
INPUT PULSES P LESS THAN
FIRST PREPARATION
NUMBER N1? — S500

Y

N

R E T U R N

# FIG.26

```
        ┌─────────────────┐
        │   POSITIONING   │
        │    OPERATION    │
        └────────┬────────┘
                 │
                 ▼
        ┌─────────────────────────┐      S610
   ┌───►│ OBTAIN WAVEFORM OF      │
   │    │ VOLTAGE                 │
   │    └────────────┬────────────┘
   │                 ▼
   │    ┌─────────────────────────┐      S620
   │    │ CALCULATE               │
   │    │ DIFFERENCE-DEGREE SCORE │
   │    └────────────┬────────────┘
   │                 ▼
   │    ┌─────────────────────────┐      S622
   │    │ DETERMINE WHETHER       │
   │    │ WAVEFORM IS SIMILAR TO  │
   │    │ REFERENCE WAVEFORM      │
   │    └────────────┬────────────┘
   │                 ▼
   │           S624
   │    ◇ IS WAVEFORM SIMILAR TO ◇  N
   │      REFERENCE WAVEFORM? ───────────┐
   │              │ Y                     │
   │              ▼ S626                  ▼ S630
   │    ┌──────────────────┐   ┌──────────────────────┐
   │    │ SET REFERENCE    │   │ DETERMINE STATE OF   │
   │    │ WAVEFORM         │   │ MOTOR-OPERATED VALVE │
   │    └────────┬─────────┘   └──────────┬───────────┘
   │             │                         ▼   S640
   │             │         ◇ IS MOTOR-OPERATED ◇
   │             │    N      VALVE IN FIRST-ROTATION
   │             │◄────────  RESTRICTEDSTATE Sr1?
   │             ▼ S650                    │ Y
   │    ◇ DOES NUMBER OF ◇                 │
   │ N    INPUT PULSES P EXCEED            │
   └────  INITIALIZATION NUMBER Ni?        │
                 │ Y                        │
                 ▼ S670                     ▼ S660
        ┌──────────────────┐   ┌──────────────────────┐
        │ NOTIFY FAILURE OF│   │ NOTIFY SUCCESS OF    │
        │ INITIALIZATION   │   │ INITIALIZATION       │
        │ OPERATION        │   │ OPERATION            │
        └────────┬─────────┘   └──────────┬───────────┘
                 │                         │
                 ▼◄────────────────────────┘
        ┌──────────────────┐      S680
        │ STOP INPUTTING   │
        │ PULSES P         │
        └────────┬─────────┘
                 ▼
        ┌─────────────────┐
        │    RETURN       │
        └─────────────────┘
```

FIG.27

```
                    ┌─────────────┐
                    │   START     │
                    └──────┬──────┘
                           │
                           ▼
          ┌────────────────────────────────┐
          │ RECEIVE INITIALIZATION COMMAND  │──── S100
          └────────────────┬───────────────┘
                           │
                           ▼
          ┌┬──────────────────────────────┬┐
          ││ SECOND PREPARATION           ││──── S200
          ││ OPERATION                    ││
          └┴──────────────┬───────────────┴┘
                           │
                           ▼
          ┌┬──────────────────────────────┬┐
          ││ FIRST PREPARATION            ││──── S700
          ││ OPERATION                    ││
          └┴──────────────┬───────────────┴┘
                           │
                           ▼
          ┌┬──────────────────────────────┬┐
          ││ POSITIONING                  ││──── S600
          ││ OPERATION                    ││
          └┴──────────────┬───────────────┴┘
                           │
                           ▼
                    ┌─────────────┐
                    │    END      │
                    └─────────────┘
```

# FIG.28

```
        ╭────────────────────╮
        │  FIRST PREPARATION  │
        │     OPERATION       │
        ╰────────────────────╯
                  │
                  ▼
   ┌──────────────────────────┐       S710
   │  START INPUTTING PULSES P │──────
   │    IN ASCENDING ORDER     │
   └──────────────────────────┘
                  │
      ┌───────────┤
      │           ▼
      │        ◇                 ◇    S720
      │      ◇                     ◇──
      │  Y ◇  IS NUMBER OF INPUT    ◇
      └───◇    PULSES P             ◇
          ◇   LESS THAN K?         ◇
            ◇                     ◇
              ◇                 ◇
                  │
                  │ N
                  ▼
   ┌──────────────────────────┐       S730
   │  OBTAIN WAVEFORM OF VOLTAGE│──────
   └──────────────────────────┘
                  │
                  ▼
   ┌──────────────────────────┐       S740
   │ SET FIRST REFERENCE WAVEFORM│─────
   └──────────────────────────┘
                  │
                  ▼
                ( 1 )
```

# FIG.29

```
                              ( 1 )
                                │
        ┌─────────────────────▼──────────────────┐
        │      ┌────────────────────────────┐         ╭─ S750
        │      │  OBTAIN WAVEFORM OF VOLTAGE │
        │      └────────────────────────────┘
        │                   │
        │      ┌────────────────────────────┐         ╭─ S760
        │      │      CALCULATE FIRST        │
        │      │   DIFFERENCE-DEGREE SCORE   │
        │      └────────────────────────────┘
        │                   │
        │  ┌──────────────────────────────────┐       ╭─ S770
        │  │ DETERMINE WHETHER WAVEFORM IS     │
        │  │ SIMILAR TO FIRST REFERENCE WAVEFORM│
        │  └──────────────────────────────────┘
        │                   │
        │              ◇ IS WAVEFORM SIMILAR     N        ╭─ S780
        │              ◇ TO FIRST REFERENCE  ─────────────────┐
        │              ◇ WAVEFORM?                             │
        │                   │ Y                                │
        │  ┌────────────────────────────┐ ╭─S790    ┌──────────────────────────────┐ ╭─S820
        │  │ SET FIRST REFERENCE WAVEFORM│         │ SET SECOND REFERENCE WAVEFORM│
        │  └────────────────────────────┘          └──────────────────────────────┘
        │                   │                               │
        │              ◇ IS NUMBER OF INPUT   ╭─S800         ( 2 )
        │   Y          ◇ PULSES P LESS THAN FIRST
        └──────────────◇ PREPARATION
                       ◇ NUMBER N1?
                            │ N
                 ┌────────────────────────────┐  ╭─ S810
                 │    SET REFERENCE WAVEFORM   │
                 └────────────────────────────┘
                            │◄──────────( 3 )
                      ╭──────────────╮
                      │   RETURN     │
                      ╰──────────────╯
```

# FIG.30

```
                    ( 2 )
                      │
                      ▼
        ┌──────────────────────────────┐
        │   OBTAIN WAVEFORM OF VOLTAGE  │── S830
        └──────────────────────────────┘
                      │
                      ▼
        ┌──────────────────────────────┐
        │  CALCULATE FIRST AND SECOND   │── S840
        │   DIFFERENCE-DEGREE SCORES    │
        └──────────────────────────────┘
                      │
                      ▼
        ┌──────────────────────────────┐
        │  DETERMINE WHETHER WAVEFORM IS│── S850
        │  SIMILAR TO FIRST AND SECOND  │
        │     REFERENCE WAVEFORMS       │
        └──────────────────────────────┘
                      │
                      ▼
               IS WAVEFORM SIMILAR ── S860        N
               TO FIRST REFERENCE ──────────────────┐
                   WAVEFORM?                         │
                      │ Y                            │
                      ▼                              ▼
    N    IS WAVEFORM SIMILAR ── S870      IS WAVEFORM SIMILAR ── S880   N
    ┌──  TO SECOND REFERENCE            TO SECOND REFERENCE  ──┐
    │        WAVEFORM?                      WAVEFORM?          │
    │           │ Y                            │ Y            │
    │           ▼                              │              │
    │      IS WAVEFORM ── S890                 │              │
    │    MORE SIMILAR TO FIRST       N         │              │
    │  REFERENCE WAVEFORM THAN ────────────────┤              │
    │   TO SECOND REFERENCE                    │              │
    │        WAVEFORM?                         │              │
    │           │ Y                            ▼              │
    │           ▼                                             │
    └─► ┌──────────────────────┐ S900  ┌───────────────────────────┐ S910
        │ SET FIRST REFERENCE  │       │ SET SECOND REFERENCE      │
        │     WAVEFORM         │       │        WAVEFORM           │
        └──────────────────────┘       └───────────────────────────┘
                      │                              │
                      ▼◄─────────────────────────────┘
               IS NUMBER OF INPUT ── S920
         Y   PULSES P LESS THAN FIRST
       ┌──      PREPARATION
       │          NUMBER N1?
       │             │ N
       │             ▼
       │   ┌──────────────────────────┐
       │   │   SET REFERENCE WAVEFORM │── S930
       │   └──────────────────────────┘
       │             │
       │             ▼
       │           ( 3 )
```

## INTERNATIONAL SEARCH REPORT

| International application No. |
|---|
| **PCT/JP2023/045451** |

| A. | CLASSIFICATION OF SUBJECT MATTER |
|---|---|

*F16K 31/04*(2006.01)i
FI:   F16K31/04 Z

According to International Patent Classification (IPC) or to both national classification and IPC

| B. | FIELDS SEARCHED |
|---|---|

Minimum documentation searched (classification system followed by classification symbols)

F16K31/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2020-16247 A (FUJI KOKI CORP.) 30 January 2020 (2020-01-30)<br>entire text, all drawings | 1-17 |
| A | JP 58-116096 A (TOYOTA JIDOSHA KABUSHIKI KAISHA) 11 July 1983 (1983-07-11)<br>entire text, all drawings | 1-17 |
| P, A | WO 2023/053973 A1 (FUJI KOKI CORP.) 06 April 2023 (2023-04-06)<br>claim 1 | 1, 14, 16-17 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/045451**

| Patent document cited in search report | | | Publication date (day/month/year) | Patent family member(s) | | | Publication date (day/month/year) |
|---|---|---|---|---|---|---|---|
| JP | 2020-16247 | A | 30 January 2020 | EP | 3828452 | A1 | |
| | | | | entire text, all drawings | | | |
| | | | | CN | 112469936 | A | |
| JP | 58-116096 | A | 11 July 1983 | (Family: none) | | | |
| WO | 2023/053973 | A1 | 06 April 2023 | CN | 116648841 | A | |

## REFERENCES CITED IN THE DESCRIPTION

**Patent documents cited in the description**

- WO 2019130928 A